# FASCICULE DE BREVET EUROPEEN

(11) **EP 2 189 056 B1**
(45) Date de publication et mention de la délivrance du brevet: **28.08.2013**
(21) Numéro de dépôt: 09172047.4
(22) Date de dépôt: 02.10.2009
(51) Int. Cl.: E04C 3/04, A01G 9/14, E04C 3/06

(54) **Structure de serre comprenant des profilés fermés comportant des rainures formant glissières**
Gewächshausstruktur mit geschlossenen Profilen, welche Schienen bildendene Nuten enthalten
Glasshouse structure comprising closed profiles having grooves forming rails

(30) Priorité: 25.11.2008 FR 0857987
(43) Date de publication de la demande: 26.05.2010
(73) Titulaire: Filclair, 13770 Venelles (FR)
(72) Inventeur: Thery, Arnauld, 13510, Eguilles (FR)
(74) Mandataire: Domange, Maxime

(56) Documents cités:
- EP-A- 1 880 595
- WO-A-01/51726
- DE-U1- 9 012 607
- GB-A- 2 297 336

## Description

La présente invention concerne le domaine des serres, notamment pour la culture de végétaux, à savoir des serres agricoles ou horticoles.

Plus particulièrement, la présente invention concerne les serres, de préférence de type « multi-chapelles », constituées d'une pluralité de nefs, recouverte chacune d'une couverture constituée à partir de films plastiques, le cas échéant constituées d'une double paroi gonflable comportant deux films superposés.

Des serres de ce type comportent une structure constituée d'une pluralité de fermes parallèles constituée chacune d'un cintre supérieur, constitué par un ou plusieurs profilé(s) formant un arc, brisé ou non, et reposant sur les extrémités supérieures de montants latéraux verticaux, eux-mêmes reliés entre eux par une traverse de rigidification de l'ensemble. Les fermes sont également reliées entre elles par des chéneaux latéraux reliant les extrémités des montants latéraux des fermes consécutives et éventuellement aussi par des entretoises longitudinales disposées sous les cintres.

Les films de couverture sont tendus par-dessus les cintres et entre les chéneaux posés transversalement pour former une nef.

Lorsque la serre ne comporte qu'une seule nef, on parle de serre « mono-chapelle » et lorsque la serre comporte une pluralité de nefs accolées parallèlement les unes aux autres transversalement à leur direction longitudinale, elles sont dénommées « multi-chapelles ». Des serres de ce type ont été décrites dans les demandes de brevets antérieures au nom de la demanderesse, notamment dans FR-99 15009, FR-06 06478, FR-07 59803 et FR-08 53371.

De façon connue, les nefs de faible longueur, notamment de longueur inférieure à 100 m, de préférence inférieure à 50 m, peuvent être couvertes sur leur toiture d'une seule enveloppe s'étendant sur toute la longueur de la nef. Mais, pour les nefs de plus grande longueur, notamment de longueur de 100 à 250 m, on installe avantageusement plusieurs enveloppes mises bout à bout dans la longueur de la nef. En pratique, une nef pourra nécessiter la mise bout à bout de deux ou trois enveloppes de couverture disposées successivement sur la longueur de la nef pour couvrir toute la longueur de sa toiture.

Les toitures de serres comportent des ouvrants permettant d'aérer l'intérieur de la serre pour optimiser le cas échéant les conditions de croissance des cultures.

Ces cadres d'ouvrants de serre, utilisés pour la ventilation statique sont constitués d'un cadre en acier qui pivotent à partir d'une panne fixe à partir de la structure. Ce système permet de piloter l'angle d'ouverture pour obtenir le volume d'aération souhaité.

Ces ouvrants s'étendent sur toute ou partie de la longueur de la « nef » et sont eux-mêmes recouverts d'un film de couverture, le cas échéant à double paroi. Les cadres d'ouvrants dont l'ouverture et la fermeture est commandée mécaniquement, de préférence par un motoréducteur, tel qu'explicité ci-après comprennent classiquement :
a. - un profilé dit « haut d'ouvrant », et
b. - un profilé dit « bas d'ouvrant », et
c. - des profilés dits « bras d'ouvrant ».

Les profilés dits haut d'ouvrant et bas d'ouvrant s'étendent dans la direction longitudinale de la nef de préférence par-dessus les cintres sur lesquels ils sont fixés. Et, selon que l'ouvrant est un ouvrant dit « ouvrant de faitage » ou au contraire un ouvrant dit « ouvrant de chéneau », le profilé haut d'ouvrant est situé au niveau ou à proximité du faitage ou respectivement, le profilé dit bas d'ouvrant est positionné au niveau ou à proximité des chéneaux en bordure basse de la toiture.

On entend ici par profilés haut ou bas d'ouvrant des profilés constitués d'une pluralité d'éléments longitudinaux unitaires assemblés les uns aux autres bout-à-bout dans la direction longitudinale de la nef.

Les profilés bras d'ouvrants s'étendent dans la direction transversale perpendiculaire à la direction longitudinale de la nef et assurent la fixation entre les haut et bas d'ouvrants, l'extrémité haute des bras d'ouvrant étant fixée au niveau des hauts d'ouvrant par une articulation en rotation et l'extrémité basse des bas d'ouvrant étant fixée rigidement sur le profil bas d'ouvrant.

Classiquement, les profilés de structure de charpente de serre, notamment les profilés de cadres d'ouvrants sont constitués de profilés tubulaires à section circulaire ou rectangulaire mono-tubulaire, qui sont fixés entre eux par des moyens de fixation tel que vissage et boulonnage requérant des opérations d'usinage notamment de pré-perçage avant assemblage et de vissage/boulonnage après assemblage.

D'autre part, différents accessoires doivent être fixés sur ces profilés de structure de charpente de serres notamment ces profilés de cadres d'ouvrants. Ces premiers profilés haut, bas et bras d'ouvrant en acier constituant une ossature, sur lesquels sont assemblés des seconds profilés acier ou aluminium permettant de maintenir une couverture plastique, c'est-à-dire utilisés à titre de support de clipsage. L'assemblage de ces deux types de profilés représente un temps de montage important et constitue un inconvénient majeur en termes de coût d'installation de la serre.

En particulier, il est nécessaire de fixer des premiers profilés à rainure ouverte aptes à recevoir des deuxièmes profilés formant clips de fixation des films de couverture ou d'autres accessoires. Il est donc nécessaire de pré-percer et visser entre eux les profilés tubulaires fermés de structure de serres et les seconds profilés à rainures ouvertes de fixation du film de couverture.

Toutes ces opérations qui requièrent des pré-perçages avant assemblage et des vissages/boulonnages après assemblage constituent une part importante du temps et du coût d'installation de la serre que l'on cherche à réduire.

Les profilés de haut et bas d'ouvrant de par leur portée longitudinale importante subissent des problèmes de tenue à la flexion et à la torsion, notamment lors de l'ouverture ou fermeture du cadre d'ouvrant.

Pour compenser ces problèmes, on place au moins un profilé de bras d'ouvrants à proximité de chaque cintre, mais en outre au moins un autre profilé de bras d'ouvrant en position intermédiaire, de préférence médiane entre deux cintres successifs dans la direction longitudinale, comme montré sur la figure 1 de EP 1 880 595.

Toutefois, ces profilés de bras d'ouvrant créent une augmentation de l'ombre portée ou occultation partielle de la lumière à l'intérieur de la serre, et il est souhaitable d'en diminuer autant que possible ce faire le nombre et l'ombre portée.

En outre, en dépit de l'insertion de bras d'ouvrants intermédiaire entre deux cintres successifs, on constate les problèmes additionnels suivants liés à des ouvertures ou fermetures de cadres d'ouvrants non uniformes sur toute la longueur du cadre, notamment sur toute la longueur de la serre, comme il va être explicité ci-après.

Classiquement, les ouvertures de cadres d'ouvrants sont réalisées à l'aide d'un dispositif comprenant un motoréducteur entraînant en rotation un tube de transmission s'étendant dans la direction longitudinale de la serre, dessous les cintres et entraîné en rotation sur lui-même par rapport à son axe longitudinal par le motoréducteur, une pluralité d'éléments supportant les bras d'ouvrant et formant crémaillère, étant fixés à la fois sur le tube de transmission et respectivement sur la pluralité de bras d'ouvrants de telle sorte que la rotation du tube de transmission entraîne le déplacement de l'élément de support de bras d'ouvrant formant crémaillère, ce déplacement ayant pour effet l'ouverture ou la fermeture du cadre d'ouvrant.

La fixation sur les bras d'ouvrant des éléments de support de bras d'ouvrant requière des pré-perçages des bras d'ouvrants pour y introduire des vis de serrage par boulonnage.

En pratique le tube de transmission est commandé par un seul motoréducteur positionné à mi-longueur du tube correspondant aussi à la mi-longueur de la serre ou de la nef. Et, lors de la rotation du tube de transmission, au fur et à mesure que l'on s'éloigne du motoréducteur on observe une variation de la torsion angulaire du tube. Cette torsion angulaire du tube est induite par une résistance à sa rotation sur lui-même résultant du poids du cadre d'ouvrant.

L'effort pour soulever l'ouvrant supporté par le tube de transmission devient de plus en plus important au fur et à mesure que l'on s'éloigne du motoréducteur impulsant la rotation du tube.

Au total, il en résulte les deux inconvénients suivants, à savoir :
1) la partie du cadre d'ouvrant commandée par un même motoréducteur ne présente pas une ouverture uniforme, l'ouverture du cadre ayant tendance à diminuer au fur et à mesure que l'on s'éloigne du motoréducteur, de par la torsion angulaire du tube de transmission, ce qui pose des problèmes d'uniformité d'aération et donc d'uniformité de croissance des cultures à l'intérieur de la serre, et
2) en position de fermeture, la sécurité de fermeture n'est pas uniforme, c'est-à-dire que l'effort de verrouillage de la fermeture de l'ouvrant n'est pas identique sur toute la longueur de l'ouvrant, ce qui cause le cas échéant des phénomènes d'aspiration de l'ouvrant aux extrémités dus à l'effet du vent en dépression.

Le but de la présente invention est donc de fournir des structures de charpente de serre, dont les cadres d'ouvrants :
- présentent une rigidité et notamment de tenue à la torsion et à la flexion accrue, et
- soient plus simples et plus rapides à assembler et à fixer entre eux, et plus simples et plus rapides à fixer à des dispositifs de fixation d'accessoires tels que des films de couverture sur lesdits profilés.

Plus particulièrement, le but de la présente invention est de fournir des cadres d'ouvrants améliorés en termes de facilité et rapidité d'installation, de performance de résistance mécanique, notamment de rigidité et de tenue à la torsion et à la flexion, et améliorant les conditions de culture notamment en termes d'uniformité d'ouverture et de fermeture des cadres d'ouvrant et de diminution de l'ombre portée induite par les cadres d'ouvrant.

Pour ce faire la présente invention fournit une structure métallique de serre agricole ou horticole, de préférence en aluminium, dont la toiture comprend des cintres supportant au moins un film de couverture, **caractérisée en ce qu**'elle comprend :
- au moins un cadre d'ouvrant constitué d'un profilé haut d'ouvrant et d'un profilé bas d'ouvrant s'étendant dans la direction longitudinale (XX') de la serre et des profilés bras d'ouvrant s'étendant dans la direction transversale, lesdits profilés haut d'ouvrant, bas d'ouvrant et bras d'ouvrant étant fixés par-dessus lesdits cintres, et
- lesdits profilés haut d'ouvrant, bas d'ouvrant et bras d'ouvrant étant constitués avec des profilés multitubulaires fermés à glissières comprenant :
   - un premier profilé tubulaire fermé à quatre cotés dit profilé central présentant une section transversale de forme carrée et
   - quatre deuxièmes profilés tubulaires fermés dits profilés latéraux identiques accolés contre respectivement chacun des quatre angles dudit profilé central, chaque dit profilé latéral présentant en section transversale une même forme symétrique par rapport à la diagonale (Y1Y1',Y2Y2') passant par l'angle du profilé central contre lequel il est accolé,
- les quatre dits profilés latéraux et ledit profilé central formant ainsi quatre rainures identiques sur les quatre faces externes dudit profilé longitudinal multitubulaire.

Un profilé multitubulaire à glissière selon l'invention joue à la fois le rôle de profilé d'ossature de structure de serre et de support de clipsage d'accessoires dans ces rainures formant glissière.

Un profilé selon la présente invention est donc constitué d'un profilé intégrant cinq profilés fermés, à savoir un profilé central et quatre profilés latéraux identiques, formant quatre rainures identiques respectivement sur chacune de ses faces.

Les quatre profilés fermés latéraux permettent d'éloigner la matière du centre de gravité de la section, c'est-à-dire de l'axe longitudinal du profilé et donc d'augmenter l'inertie globale. La présence de ces cinq profilés permet d'obtenir une excellente rigidité du profilé, ainsi qu'une grande inertie, et notamment pour une dimension donnée en section transversale du profilé une inertie et une rigidité accrue par rapport à un profilé mono-tubulaire à section rectangulaire ou circulaire, pour une quantité de matière et donc un poids de profilé donné ou inversement une quantité de matière et donc un poids de profilé réduit pour une inertie donnée.

La présence du profilé fermé central permet donc d'améliorer la tenue à la torsion et à la flexion, mais aussi de simplifier et faciliter la fixation l'un avec l'autre de deux profilés disposés perpendiculairement par un système de fixation solidaire d'un des profilés à l'intérieur de son dit profilé central, à savoir par un dispositif de fixation par expansion à l'intérieur dudit profilé central qui sera explicité ci-après.

La combinaison des cinq profilés formant lesdites rainures sur chacune des faces du profilé permet également de simplifier et faciliter la fixation de profilés entre eux, ainsi que la fixation d'accessoires fonctionnels sur lesdits profilés, tels que des profilés clips de fixation de films de couverture apte à s'emboîter dans la rainure et toutes pièces à glissière pouvant coulisser dans les rainures et le cas échéant y être bloquée. La présence de rainures sur les faces externes du profilé multitubulaire à glissières selon l'invention, permet en effet d'utiliser des pièces coulissantes solidaires d'accessoires dans les rainures formant glissières, ce qui permet de faciliter le montage de ces accessoires sur les profilés, notamment de le pré-assembler à terre et permet également de faciliter l'utilisation des profilés notamment des cadres d'ouvrant comme il sera explicité ci-après.

Un profilé selon l'invention remplace donc au minimum deux pièces et donc supprime le temps nécessaire d'assemblage entre ces deux pièces, à savoir le profilé de structure de charpente sans rainure et un profilé avec rainure apte à recevoir un profilé de fixation de films de couverture par exemple.

L'utilisation des profilés multitubulaires d'inertie importante selon l'invention dans un cadre d'ouvrant permet d'obtenir un cadre d'ouvrant de grande rigidité, ce qui est avantageux dans la mesure où ces cadres d'ouvrants sont soumis aux sollicitations extérieures du vent.

Cette plus grande rigidité des profilés du cadre d'ouvrant permet de limiter le nombre de bras d'ouvrant transversaux et donc aussi de limiter les ombres portées au sol.

D'autre part, comme il sera explicité ci-après la géométrie des profilés selon l'invention, qui possède des rainures identiques sur chacune de leur faces permet d'intégrer un grand nombre de fonctionnalités tel que clipsage de film de couverture ou de filet anti-insectes, assemblage sur la charpente de la toiture de serre, intégration d'une goulotte de récupération des eaux de condensation, intégration d'un joint d'étanchéité à l'air et à l'eau entre autres.

Enfin, les profilés selon l'invention permettent d'obtenir un cadre d'ouvrant dont la légèreté et la rigidité permettent d'en réaliser le pré-montage au sol d'une part, et d'autre part, en utilisation, permettent à partir d'un moteur d'une même puissance donnée de commander l'ouverture ou la fermeture d'une longueur d'ouvrant plus importante. Et, la possibilité d'emboîter ou faire coulisser des dispositifs de fixation d'accessoires sur lesdits profilés lors de leur assemblage au sol, représente également un gain de temps de montage important.

Au total, la géométrie des profilés selon l'invention qui intègre des rainures identiques sur ces quatre faces, permet en effet d'intégrer un grand nombre de fonctionnalités visant à la fois la simplification et la rapidité du montage de la serre et notamment des cadres d'ouvrant, mais également contribue à l'amélioration de ses performances mécaniques et performances de conditions de culture.

Avantageusement, la structure de serre selon l'invention comporte :
- une pluralité de fermes parallèles constituées chacune d'un cintre supérieur formant un arc brisé ou non et reposant sur les extrémités supérieures de deux poteaux latéraux verticaux, de préférence eux-mêmes reliés entre eux par une traverse de rigidification et par des chéneaux latéraux reliant desdits poteaux latéraux verticaux des fermes consécutives, lesdites fermes étant recouvertes d'au moins un film de couverture tendu sur les cintres et entre les chéneaux,
- ladite structure comprenant desdits profilés multitubulaires pour constituer au moins un cadre d'ouvrant, et
- on ne met en oeuvre qu'un seul bras d'ouvrant entre deux cintres consécutifs excepté les extrémités du cadre d'ouvrant.

Avantageusement encore, dans la structure de serre selon l'invention, les dimensions en section transversale des profilés bras d'ouvrant sont inférieures à celles des profilés haut d'ouvrant et bas d'ouvrant.

Plus particulièrement, chaque dit profilé latéral comprend deux parois latérales, chaque paroi latérale comprenant une partie droite en élévation par rapport à la face externe d'un côté du profilé central, ladite partie droite de paroi latérale se prolongeant à son extrémité par une partie en forme de lèvre formant une protubérance vers l'intérieur de la rainure définie par l'espace entre deux parois latérales en vis-à-vis de deux profilés latéraux contigus, et chaque dit profilé latéral comprend une paroi externe s'étendant entre les extrémités des dites deux parois latérales dudit même profilé latéral.

Selon une première variante de réalisation d'un profilé longitudinal multitubulaire fermé selon l'invention, chaque dite paroi externe de chaque dit profilé latéral forme une cornière à profil en section transversal à angle droit pointé vers l'extérieur comprenant deux côtés perpendiculaires. On comprend dans ce mode de réalisation, la section transversale dudit profilé multitubulaire s'inscrit dans un carré. Ces profilés sont dénommés ici « profilés multitubulaires fermés à section carrée ».

Selon une autre variante de réalisation d'un profilé longitudinal multitubulaire fermé, la structure de serre selon l'invention comprend des profilés multitubulaires fermés de section arrondie dont chaque dite paroi externe de dit profilé latéral présente un profil courbe convexe en section transversale, la dite courbure étant de préférence en arc de cercle, dont le centre de courbure correspond au centre de la section carrée du dit profil central, de préférence un arc de cercle sur 40 à 45°.

On comprend que dans ce mode de réalisation la section transversale de la paroi externe de chacun desdits profilés latéraux s'inscrit dans un cercle. Ces profilés sont dénommés ici « profilés multitubulaires fermés à section arrondie ».

Avantageusement, la structure de serre selon l'invention comprend :
- desdits profilés haut d'ouvrant et bas d'ouvrant constitués de dits profilés multitubulaires fermés à section carrée, et
- desdits profilés bras d'ouvrant constitués de dits profilés multitubulaires fermés à section arrondie.

Avantageusement encore, la structure de serre selon l'invention comprend en outre une porte de serre constituée de dits profilés multitubulaires, de préférence de dits profilés multitubulaires à section carrée.

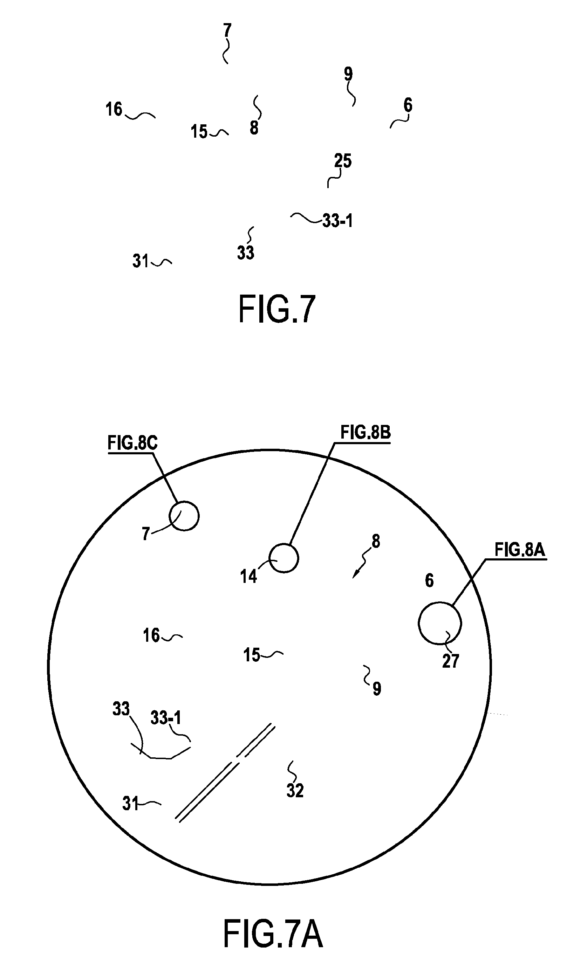

D'autres caractéristiques et avantages de la présente invention apparaîtront à la lumière de la description détaillée qui va suivre, faite en référence aux figures 1 à 13 dans lesquelles :
- La figure 1 représente une vue en perspective d'une nef de serre équipée d'un cadre d'ouvrant selon la technique antérieure à proximité des chéneaux en bas des toitures et la figure 1A représente un détail de ferme 10-1 et la figure 1B représente un détail en perspective du cadre d'ouvrant de la figure 1.
- La figure 2 représente une vue en coupe transversale d'un profilé fermé 6 d'ouvrant de la technique antérieure sur lequel est fixé un profilé ouvert 6a ou semelle de fixation d'un profilé clip de fixation 12,13 d'une couverture constituée d'un film 11 à double parois (11a,11b).
- La figure 3 montre le détail d'un dispositif d'ouverture 25 de cadre d'ouvrant coopérant avec un bras d'ouvrant 8.
- Les figures 4A et 4B montrent une coupe en section transversale d'un profilé multitubulaire à glissière selon l'invention à profil carré 1a (figure 4A) et à profil arrondi 1b (figure 4B), la figure 4C étant une vue en perspective de la jonction bout à bout de deux profilés 1a selon l'invention.
- La figure 5 montre une serre 10 avec deux nefs 10a et 10b accolées le long d'un chéneau longitudinal 33, équipée de cadres d'ouvrant 5 réalisés avec des profilés multitubulaires à glissières 1a,1b selon l'invention. La figure 5A est une vue détaillée de la figure 4 au niveau du cintre d'extrémité et bras d'ouvrant d'extrémité 8-1 du cadre d'ouvrant 5 installé à proximité du chéneau 33.
- La figure 6 est une variante de réalisation dans laquelle deux cadres d'ouvrant sont disposés symétriquement au faîtage de la nef.
- La figure 7 est une vue en perspective d'un cadre d'ouvrant ouvert avec l'ouverture protégée par un filet anti-insectes 16. La figure 7A est une vue de côté de la figure 7.
- La figure 8 représente une vue de côté d'un bras d'ouvrant 8 équipé à ses extrémités d'une charnière 19 et respectivement d'une éclisse 20 et, dans sa rainure inférieure 8c, d'une chape d'articulation 14 apte à recevoir un dispositif support de bras en forme de crémaillère 15.
- La figure 8A est une vue détaillée de côté de la liaison entre un profilé haut 6 d'ouvrant et un profilé bras d'ouvrant 8 du cadre d'ouvrant des figures 7 et 7A.
- La figure 8B est un détail de la jonction d'un dispositif 15 support de bras d'ouvrant 8 formant crémaillère avec le bras d'ouvrant 8 du cadre d'ouvrant des figures 7 et 7A au niveau d'une chape d'articulation 14.
- La figure 8C est une vue de côté détaillant la jonction de l'extrémité des bras d'ouvrant 8 avec un profilé bas d'ouvrant 7 du cadre d'ouvrant des figures 7 et 7A.
- La figure 9A représente une charnière 19 équipée d'un dispositif de blocage 20 apte à être inséré à l'extrémité du bras d'ouvrant à l'intérieur du profilé central 2 du bras d'ouvrant 8.
- La figure 9B représente le détail de la fixation de la charnière 19 sur une rainure latérale interne 6b du profilé haut d'ouvrant 6.
- La figure 10A représente un dispositif de fixation de bras d'ouvrant 8 sur un profilé bas d'ouvrant 7 comprenant une éclisse 21 et un dit dispositif de blocage 20.
- La figure 10B représente le détail de la fixation de l'éclisse 21 sur une rainure latérale interne 7b du profilé bas d'ouvrant 7.
- Les figures 11A et 11B représentent deux variantes de réalisation d'un bras d'ouvrant d'extrémité 8-1 équipé d'un filet anti-insectes 16-1.
- Les figures 12A et 12B représentent l'ouverture d'un profilé bras d'ouvrant 8, dont la chape d'articulation 14 du dispositif support 15 est positionnée à une distance du profilé haut d'ouvrant 6 différente sur les figures 12A et 12B.
- La figure 13 représente une porte de serre selon l'invention réalisée à l'aide des profilés multitubulaires selon l'invention à section carrée 1a.
- La figure 13A représente le détail de l'assemblage de deux profilés constituant les montants transversaux et longitudinaux de la porte.
- La figure 13B représente le détail de montage d'une poignée 30a.
- La figure 13C représente le détail de fixation d'un vitrage 30b à titre de panneau de porte.
- La figure 13D représente le détail de montage d'une brosse d'étanchéité 30d.

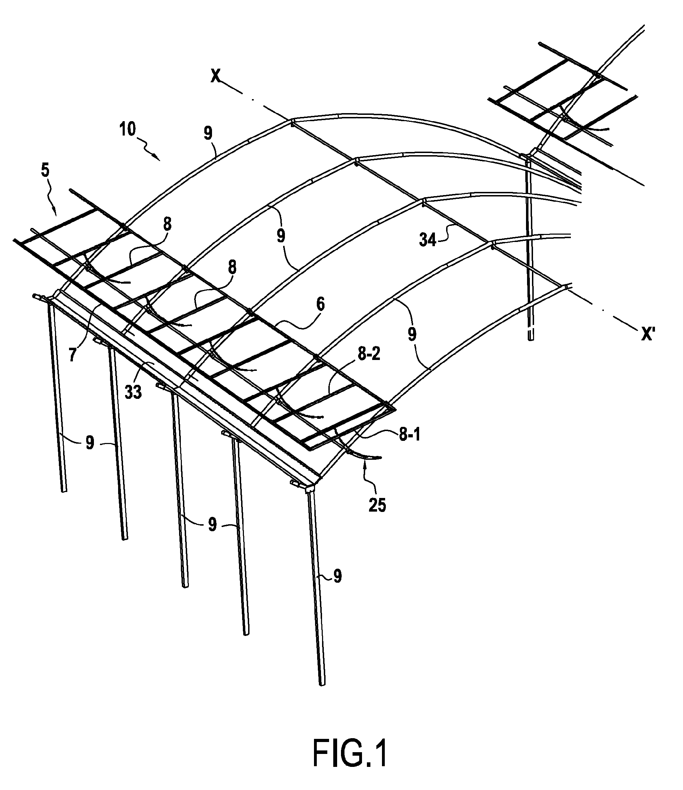

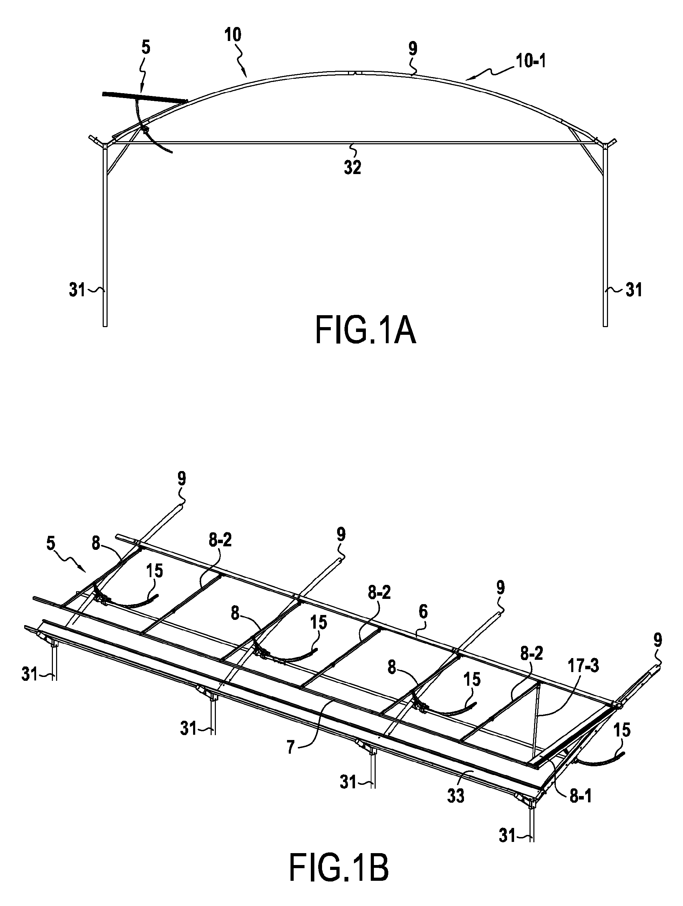

La figure 1 représente une nef de serre 10 telle que connue de l'état de la technique. Cette nef 10 est composée de fermes 10-1 implantées parallèlement dans le sol selon un pas régulier P. Les fermes 10-1 sont composées de poteaux droits 31, supportant au niveau de leur extrémités supérieures un cintre 9 en forme d'arceau ou en forme d'arc brisé au faîte des fermes 10-1.

Les fermes sont également reliées entre elles par une entretoise longitudinale supérieure 34 disposée sous les cintres 9 en arc brisé.

Les deux poteaux 31 verticaux sont reliés entre leurs extrémités supérieures par une traverse horizontale 32 et supportent au niveau de ces extrémités supérieures un cintre 9. Lesdites fermes 10-1 sont reliées les unes aux autres par des chéneaux 33 longitudinaux fixés entre lesdites extrémités supérieures des poteaux 31 des fermes.

Dans le sens longitudinal de la nef 10, les fermes 10-1 sont donc reliées entre elles par des chéneaux 33, servant à la récupération et l'évacuation des eaux de pluie. De plus, un ouvrant d'aération 5 est monté sur les cintres 9 des fermes 10-1 dans le sens longitudinal de la nef. Cet ouvrant 5. La nef 10 est destinée à être recouverte d'au moins une enveloppe de couverture 11 constituée de un ou deux films de matière plastique transparente, par exemple de polyéthylène. Cette enveloppe est tendue et fixée par des clips ou dispositifs de fixation 12,13 selon l'invention d'une part sur les cintres 9 et d'autre part le long des ouvrants 5, comme il sera explicité ci-après.

Sur la figure 1A, on a représenté une variante de réalisation préférée d'une ferme 10-1 avec un cintre en forme d'arceau. Sur la figure 1B on a représenté un cadre d'ouvrant de la technique antérieure qui est composée par des profilés hauts d'ouvrant 6 disposés dans la direction longitudinale XX' et fixés sur les cintres 9, ainsi que des profilés bas d'ouvrant 7 arrivant à proximité de chéneaux 33, de préférence sur le bord 33-1 des chéneaux 33, lorsque le cadre d'ouvrant est fermé et que les profilés bas d'ouvrant 7 reposent également sur les cintres 9.

Les profilés haut et bas d'ouvrant sont constitués par assemblage bout à bout d'éléments unitaires de profilés de 3 à 6m par exemple, correspondant à la distance entre deux ferme et donc deux cintres 9 consécutifs dans la direction longitudinale XX'.

Les profilés haut d'ouvrant 6 et bas d'ouvrant 7 sont reliés par des profilés dits bras d'ouvrant de 1 à 2m disposés transversalement, c'est-à-dire perpendiculaire à la direction longitudinale XX'.

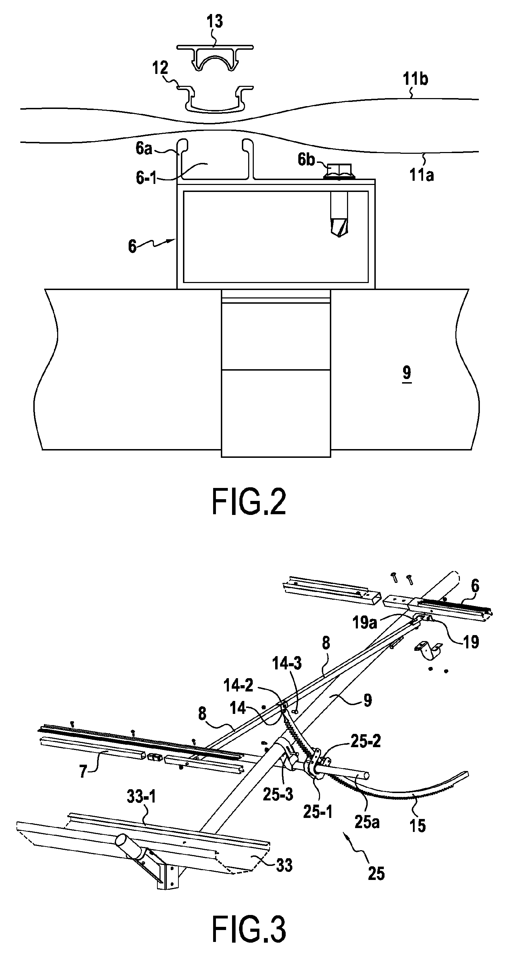

Compte tenu de la constitution des profilés haut et bas d'ouvrant tel que représenté sur la figure 2 avec un unique profil fermé dont les propriétés de rigidité sont limitées, il est nécessaire, compte tenu en outre de la longue portée dans la direction longitudinale XX' de ces cadres d'ouvrant 5, de mettre en oeuvre un bras d'ouvrant équipé de dispositif d'ouverture de cadre d'ouvrant 25 tel que représenté sur la figure 3 à proximité de chaque cintre 9. Mais, en outre, il est également nécessaire de mettre en oeuvre des profilés bras d'ouvrant environ à mi-distance entre deux cintres 9 consécutifs.

Sur la figure 2, on montre comment un profilé de haut d'ouvrant 6 selon la technique antérieure comportant un unique profil fermé à section transversale rectangulaire doit être couplé à un deuxième profilé ouvert 6a formant une semelle fixée par une vis et boulon 6b sur la face supérieure du profilé haut d'ouvrant 6. Le deuxième profilé formant semelle 6a fixée sur le profilé ouvrant 6 comporte une rainure 6-1 apte à recevoir des profilés en matière plastique 12 à section transversale de type en oméga aptes à venir s'emboîter dans la rainure 6-1 et coincer les films 11a et 11b d'une double paroi de couverture 11 intercalée entre le profilé 12 et le fond de la rainure 6-1. L'emboîtement du profilé de fixation 12 dans la rainure 6-1 se fait à l'aide d'un profilé clé 13 formant un moyen d'écartement venant s'emboîter en force dans l'ouverture du profilé de fixation de film 12 en en écartant les branches latérales venant se bloquer contre les branches latérales de la rainure 6-1 de façon connue.

Sur la figure 3, on représente les différents dispositifs permettant la fixation des profilés bras d'ouvrant de la technique antérieure, comportant un unique profil fermé à section carrée, sur le profilés haut d'ouvrant 6 et profilé bas d'ouvrant 7. Comme représenté sur la figure 3, la fixation d'une charnière 19 à une des extrémités du bras d'ouvrant 8 pour permettre sa fixation et son articulation en rotation autour du profilé haut d'ouvrant 6 requière après perçage du profilé des faces supérieure et inférieure du profilé bras d'ouvrant 8 et la fixation de la charnière 19 à l'aide de vis 19a.

Sur la figure 3, on a représenté également un dispositif d'ouverture 25 de cadre d'ouvrant 5 coopérant au niveau de chaque bras d'ouvrant positionné dans la direction longitudinale à proximité de chaque cintre. Ces dispositifs d'ouverture 25 de cadre d'ouvrant connus comportent :
- un tube de transmission disposé longitudinalement, fixé dessous les cintres 9 par des colliers 25-3, et
- un motoréducteur 26 disposé sensiblement à mi-longueur du cadre d'ouvrant et donc, qui entraîne en rotation sur lui-même autour de son axe XX' le tube de transmission 25a, lequel coopère avec des dispositifs de support de bras d'ouvrant 15 en forme de crémaillère représentés à profil courbe, mais pouvant être aussi à profil rectiligne, ledit support 15 coopérant avec le tube de transmission 25a auquel ils sont reliés par l'intermédiaire de dispositifs de fixation 25-1 (étrier) incorporant un élément cranté 25-2 (pignon) sur la surface externe du tube de transmission 25-1. Les crans 25-2 entraînent le déplacement vers le haut ou vers le bas de la crémaillère 15 et donc respectivement l'ouverture ou la fermeture du cadre d'ouvrant 5, dans la mesure où les dispositifs de support 15 en forme de crémaillère supportent à leur extrémité supérieure les bras ouvrant auxquels ils sont reliés par l'intermédiaire d'une chape d'articulation 14. Tel que représenté sur la figure 3 selon la technique antérieure, la chape d'articulation 14 est fixée au bras d'ouvrant par l'intermédiaire d'un collier à section carrée 14-2 dont la fixation à l'aide d'une vis 14-3 requière un pré-perçage du bras d'ouvrant.

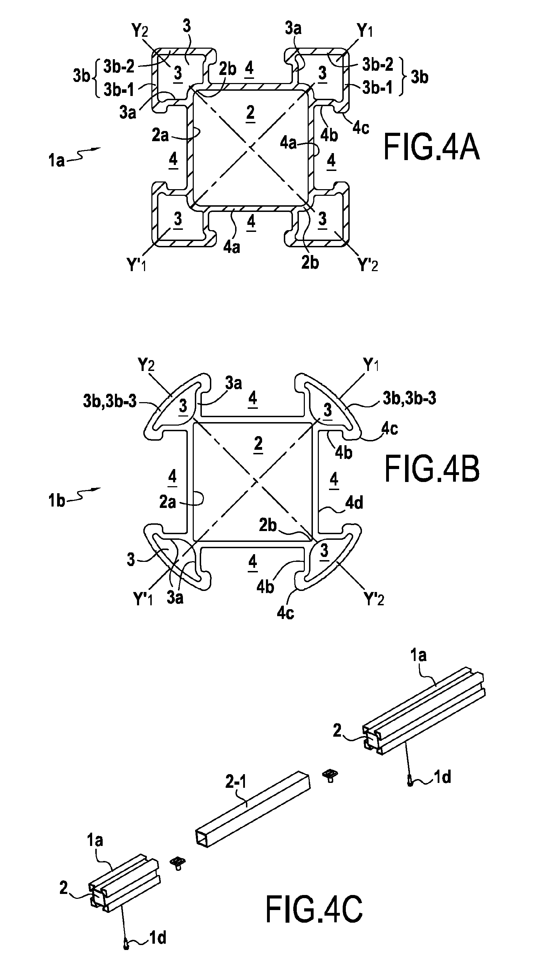

Sur les figures 4A et 4B, on a représenté deux profilés multitubulaires à glissière à profil carré 1a et à profil arrondi 1b selon l'invention.

Ces profilés multitubulaires fermés à glissière 1a,1b comprennent :
- un premier profilé tubulaire fermé à quatre cotés 2a dit profilé central 2 présentant une section transversale de forme carrée et
- quatre deuxièmes profilés tubulaires fermés dits profilés latéraux 3 identiques accolés contre respectivement chacun des quatre angles 2b dudit profilé central, chaque dit profilé latéral présentant en section transversale une même forme symétrique par rapport à la diagonale Y1Y1',Y2Y2' passant par l'angle 2b du profilé central contre lequel il est accolé,
- les quatre dits profilés latéraux 3 et ledit profilé central 2 formant ainsi quatre rainures 4 identiques sur les quatre faces externes dudit profilé longitudinal multitubulaire 1.

Chaque dit profilé latéral 3 comprend deux parois latérales 3a, chaque paroi latérale 3a comprenant une partie droite 4b en élévation par rapport à la face externe d'un côté 2a du profilé central 2, ladite partie droite 4b de paroi latérale 3a se prolongeant à son extrémité par une partie en forme de lèvre 4c formant une protubérance vers l'intérieur de la rainure 4 définie par l'espace entre deux parois latérales 3a en vis-à-vis de deux profilés latéraux 3 contigus, et chaque dit profilé latéral 3 comprend une paroi externe 3b, 3b-1,3b-2,3b-3 s'étendant entre les extrémités des dites 2 parois latérales 3a dudit même profilé latéral.

On comprend que :
- chaque dite rainure 4 d'un profilé longitudinal multitubulaire fermé 1a,1b est formée par une paroi de fond 4a définie par la partie de la face externe d'un côté du profilé central 2 entre deux profilés latéraux 3 contigus et les deux parois latérales 3a en vis-à-vis de deux dits profilés latéraux 3 contigus, lesdites parties en forme de lèvre 4c desdites parois latérales 3a formant une protubérance vers l'intérieur de la rainure, et
- lesdites parois latérales 3a d'un même profilé latéral 3 sont en appui sur les faces externes 3b des côtés du profilé central 2, disposées symétriquement l'une par rapport à l'autre sur les deux côtés 2a du profilé central 2 formant l'angle droit contre lequel est accolé le dit profilé latéral 3, et
- les bords transversalement opposés d'une même paroi externe 3b d'un profilé latéral 3a forment les rebords externes des parties en forme de lèvres 4c des extrémités desdites parties droites 4a des parois latérales 3a de chaque profilé latéral 3.

Sur la figure 4A, on a représenté selon une première variante de réalisation un profilé multitubulaire fermé à section carrée, chaque dite paroi externe 3b de chaque dit profilé latéral 3 formant une cornière à profil en section transversale à angle droit pointé vers l'extérieur comprenant deux côtés perpendiculaires 3b-1,3b-2.

Sur la figure 4B, on a représenté selon une seconde variante de réalisation un profilé multitubulaire fermé selon l'invention s'inscrivant dans un cercle dénommé profilé multitubulaire à section arrondie 1b, chaque dite paroi externe de dit profilé latéral présentant un profil courbe convexe 3b-3 en section transversale, la dite courbure étant de préférence en arc de cercle, dont le centre de courbure correspond au centre de la section carrée du dit profil central, de préférence un arc de cercle sur 40 à 45°.

A titre illustratif, on indique que des profilés de ce type sont constitués d'éléments unitaires longitudinaux d'environ 3 à 6m de longueur assemblés les uns aux autres par des éléments tubulaires à section carrée 2-1 s'emboîtant dans lesdits profils centraux 2 de deux éléments unitaires 1a ou 1b mis bout à bout dans la direction longitudinale XX' de façon à s'emboîter autour de l'élément tubulaire d'assemblage 2-1 comme représenté sur la figure 4C.

Pour une utilisation sur une structure de serre, notamment pour réaliser des profilés haut d'ouvrant 6, bas d'ouvrant 7, on met en oeuvre des profilés multitubulaires à profil carré 1a selon l'invention de dimension de section transversale globale de 4 à 8cm, de préférence d'environ 5cm, avec un profilé central 2 de 2,5 à 6,5cm, de préférence environ 3cm.

En revanche, pour réaliser des profilés de bras d'ouvrant qui s'étendent sur une distance de 1 à 2m seulement d'une part, et qui d'autre part sont disposés régulièrement à une distance de 2 à 4m les uns des autres pour former les bras d'ouvrant d'un cadre d'ouvrant, on met en oeuvre des profilés multitubulaires à section arrondie 1b, dont la rigidité est légèrement inférieure aux profilés à section carrée, mais dont l'ombre portée est inférieure. En pratique, les dimensions globales des profilés à section arrondie 1b sont de 3 à 6cm, de préférence environ 4cm, leur profilé central 2 étant un carré de côté de 2 à 4,5cm, de préférence environ 2,5cm.

En ce qui concerne la section circulaire de la paroi externe 3b-3 du profilé multitubulaire selon l'invention à section arrondie 1b, leur courbure correspond à un rayon de courbure tel que le centre de courbure correspond au centre de la section carrée du profilé central. L'épaisseur des différentes parois desdits profilés est de 1 à 3mm.

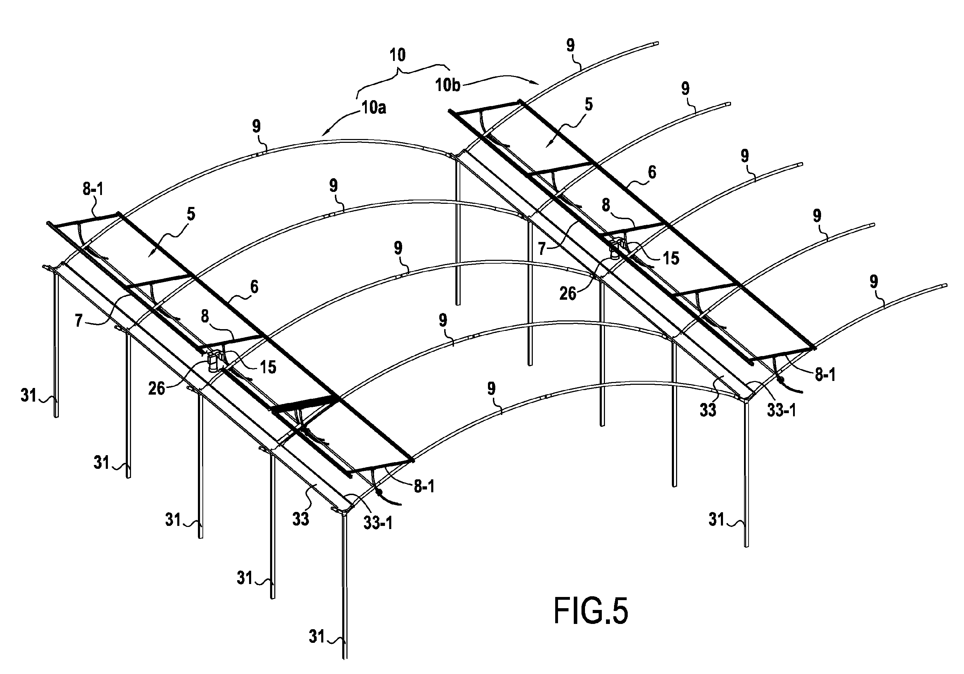

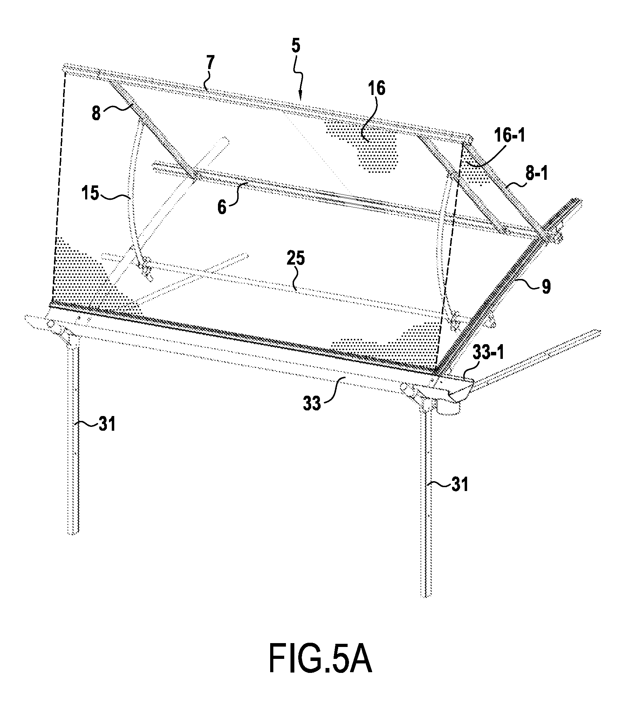

Sur la figure 5, on a représenté une structure de serre 10 selon l'invention comprenant deux nefs 10a et 10b partageant un chéneau longitudinal 33 à la jonction de leurs extrémités de cintres juxtaposés, arrivant fixées à l'extrémité supérieure de poteaux latéraux verticaux 31 communs.

Les nefs comportent des cintres en arceau à profil circulaire 9.

Selon l'invention, les nefs 10a et 10b comportent des cadres d'ouvrant 5 réalisés avec des profilés multitubulaires fermés 1a et 1b selon l'invention, tels que :
- les profilés dits haut d'ouvrant 6 et bas d'ouvrant 7 sont constitués de dits profilés multitubulaires fermés à section carrée 1a dont chaque dite paroi externe de chaque dit profilé latéral forme une cornière à profil en section transversal à angle droit pointé vers l'extérieur comprenant deux côtés perpendiculaires 3b-1,3b-2, et
- les profilés dits bras d'ouvrant 8 sont constitués de dits profilés multitubulaires fermés à section arrondie 1b dont chaque dite paroi externe de dit profilé latéral présente un profil courbe convexe 3b-3 en section transversal, la dite courbure étant en arc de cercle, dont le centre de courbure correspond au centre de la section carrée du dit profil central, de préférence un arc de cercle sur 40 à 45°.

Ce mode de réalisation permet de privilégier la rigidité pour les profilés haut et bas d'ouvrant pour la portée la plus longue, et de privilégier une surface de réflexion de la lumière réduite et donc ombre portée réduite pour les bras d'ouvrant qui ont une portée en longueur réduite, mais qui sont présents en plus grand nombre. En outre, les bras d'ouvrant sont soumis à des sollicitations mécaniques moins importantes, que les profilés haut et bas d'ouvrant.

Les dimensions en section transversale des profilés dits bras d'ouvrant (8) est inférieure à celle des profilés dits haut d'ouvrant (6) et bas d'ouvrant (7), et on ne met en oeuvre qu'un seul bras d'ouvrant entre 2 cintres (9) consécutifs excepté aux extrémités du cadre d'ouvrant. Ce mode de réalisation permet donc de réduire le nombre de bras d'ouvrant par rapport au cadre d'ouvrant de la technique antérieure. On peut ainsi arriver à un gain de matière jusqu'à 30% dans les bras d'ouvrant de par l'utilisation de profilés à section arrondie de dimension réduite plutôt que des profilés à section carrée identiques à ceux des haut et bas d'ouvrant.

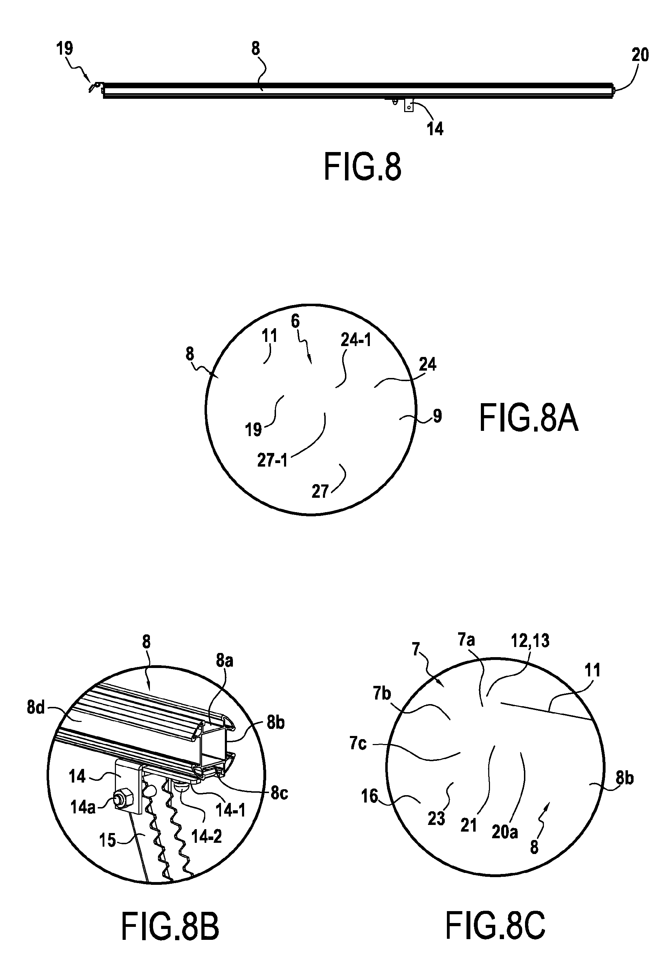

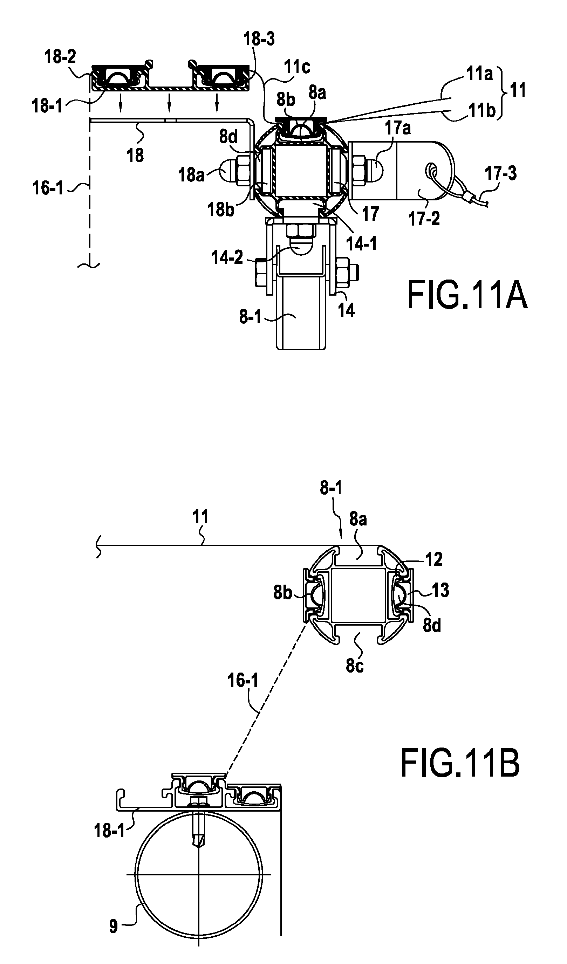

Tel que représenté sur les figures 8A et 8C et figure 11B, les profilés haut d'ouvrant et bas d'ouvrant, ainsi que de préférence les profilés bras d'ouvrants 8-1 aux extrémités du cadre d'ouvrant, comportent une rainure 6a-6d,7a-7d,8a-8d, de préférence une rainure supérieure 6a,7a pour les profilés haut et bas d'ouvrant et une rainure latérale 8b,8d pour lesdits profilés bras d'ouvrant, coopérant avec un profilé formant un clip de fixation 12 apte à se déformer pour s'emboîter dans ladite rainure de manière à y fixer un film de couverture 11 par pincement, ledit film étant intercalé entre ladite rainure 6a,7a,8b-8d et ledit profilé formant un clip de fixation 12, ledit profilé de fixation du film étant en matière plastique extrudée, de préférence ledit profilé formant clip de fixation 12 étant un profilé ouvert de type en oméga lui-même coopérant avec un profilé clé 13 formant un moyen d'écartement venant s'emboîter en force dans l'ouverture dudit profilé de fixation de film et ainsi bloquer ledit profilé de fixation de film à l'intérieur de la rainure dudit profilé haut d'ouvrant, bas d'ouvrant et le cas échéant bras d'ouvrant.

Tel que représenté sur la figure 8A, les profilés haut d'ouvrant 6 comportent :
- au moins un collier de serrage 27, fixé par vissage à une première plaquette ou lardon 27-1 emboîté dans la rainure inférieure 6c dudit profilé haut d'ouvrant, et apte à coulisser dans ladite rainure avant blocage par vissage, ledit collier permettant la fixation du profile haut d'ouvrant autour dudit cintre 9 sur lequel il repose, et
- de préférence, une rainure latérale externe 6d du haut d'ouvrant dans laquelle vient s'emboîter un profilé formant gouttière de récupération de condensation 24.

Tel que représenté sur la figure 8B, les profilés bras d'ouvrants 8 comportent une chape d'articulation 14 apte à coulisser avant blocage par vissage dans leur rainure inférieure 8c, chape 14 à laquelle est fixée et articulée en rotation l'extrémité d'une pièce support 15 de bras d'ouvrant, ladite pièce support de bras d'ouvrant étant apte à être déplacée de manière à soulever ou baisser ledit bras d'ouvrant 8 articulé en rotation au niveau desdits profilés haut d'ouvrant 6 à l'aide de charnières 19. Plus précisément, chaque articulation 14 est fixée à l'extrémité supérieure de la crémaillère 15 par des vis et boulons 14a et la chape 14 est solidaire de la rainure inférieure 8d du bras d'ouvrant 8, car elle se prolonge par un lardon coulissant 14-1 apte à être bloqué dans la rainure intérieure 8d par des vis et boulons 14-2. Ce mode de fixation desdites chape d'articulation dans la rainure inférieure de bras d'ouvrant permet d'éviter une opération de perçage du bras d'ouvrant.

D'autre part, comme explicité ci-après, elle autorise un réglage de la position d'attache de la chape d'articulation le long du bras d'ouvrant, ce qui permet d'obtenir une ouverture ou fermeture uniforme du cadre d'ouvrant sur toute sa longueur.

Tel que représenté sur les figures 11A et 11B représentant deux variantes de bras d'ouvrant d'extrémité les bras d'ouvrant 8-1 constituant une extrémité du cadre d'ouvrant 5 comportent l'un au moins des éléments suivants dans une de leurs rainures latérales 8b-8d :
- desdits profilés de fixation de film de couverture 12,13 aptes à s'emboîter dans ladite rainure latérale pour y fixer le film de couverture par pincement, et
- des profilés de fixation 12,13 de filet anti-insectes 16-1 aptes à se déformer pour s'emboîter dans ladite rainure latérale de manière à fixer ledit filet 16-1 par pincement entre ladite rainure et ledit profilé, formant un clip de fixation 12,13, ledit filet anti-insectes 16-1 étant fixé à son autre bord au cintre 9 d'extrémité de la serre, et
- une plaque 17 apte à coulisser avant blocage par vissage 17a dans ladite rainure latérale 8c,8d, ladite plaque supportant un câble de contreventement 17-3, ledit câble permettant notamment de contreventer le cadre d'ouvrant en maintenant l'équerrage de celui-ci, et
- une équerre 18 supportant un profilé ouvert 18-1 formant des rainures 18-1,18-2,18-3 aptes à coopérer avec des profilés de fixation 12,13 de film de couverture 11 ou de filet anti-insectes 16-1, ladite équerre 18 étant apte à coulisser avant blocage par vissage à l'intérieur de ladite rainure.

Sur la figure 11B, la rainure latérale externe 8d du bras d'ouvrant d'extrémité 8-1 coopère avec des profilés de fixation 12,13 formant clip de fixation de la couverture 11, tandis que la rainure latérale interne 8b coopère avec des clips de fixation 12,13 bloquant un film anti-insectes 16-1, rejoignant à son autre extrémité le cintre adjacent 9. Sur la figure 11B, le bras d'ouvrant d'extrémité 8-1 est en position d'ouverture par rapport au cintre 9.

Sur la figure 11A, la plaquette 17 coulissant dans la rainure latérale interne 8b bloquée dans celle-ci grâce à un écrou 17a, laquelle vis permet également de bloquer une équerre de fixation 17-2 à laquelle sont fixés des câbles de contreventement 17-3 permettant de maintenir l'équerrage du cadre d'ouvrant.

L'équerre 18 est en fait fixée dans la rainure latérale externe 8d par une vis 18a coopérant avec une plaquette 18b, coulissant à l'intérieur de la rainure latérale 8d. Le vissage de la vis 18a permet de bloquer la plaquette 18b et dans la rainure 8d, ainsi que l'équerre 18 contre la face latérale externe du profilé de bras d'ouvrant d'extrémité 8a.

Ces modes de fixation desdites plaque 17 et équerre 18 dans les rainures latérales du bras d'ouvrant permettent également d'éviter des opérations de perçage de bras d'ouvrant. Sur la figure 8C, ledit profilé bas d'ouvrant 7 comporte :
- un profilé en matière élastomère formant joint d'étanchéité 23 bloqué à l'intérieur de la rainure inférieure 7c dudit bas d'ouvrant, et
- de préférence une rainure latérale externe 7b comportant un profilé de fixation 12,13 de filet anti-insectes 16 bloqué à l'intérieur de ladite rainure.

Ce joint 23 est avantageux car le profilé bas d'ouvrant est le seul profilé venant en appui sur le bord latéral supérieur 33-1 du chéneau 33.

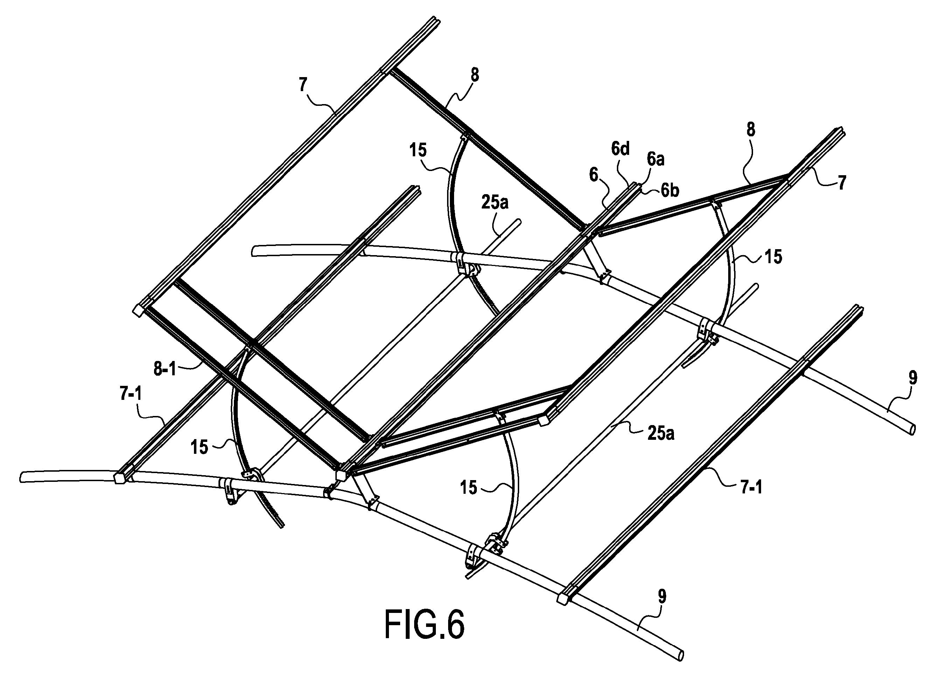

Pour un cadre d'ouvrant de faîtage, on peut améliorer l'étanchéité, en ajoutant un profilé multitubulaire selon l'invention à section carrée 7a comme représenté sur la figure 6, fixé sur le cintre 9 de manière à ce que, en position de fermeture, le joint inférieur 23 du profilé de bas d'ouvrant 7 du cadre d'ouvrant 5 repose sur le profilé 7-1 et même plus précisément dans la rainure supérieure 7a du profilé 7-1.

Comme illustré figures 5A et 6, on préfère doubler le bras d'ouvrant d'extrémité 8-1 en plaçant un bras d'ouvrant de part et d'autre des cintres d'extrémité 9-1 de nefs pour renforcer la structure du cadre d'ouvrant à ses extrémités, lesquelles supportent le maximum d'effort de flexion compte tenu des effets de bord.

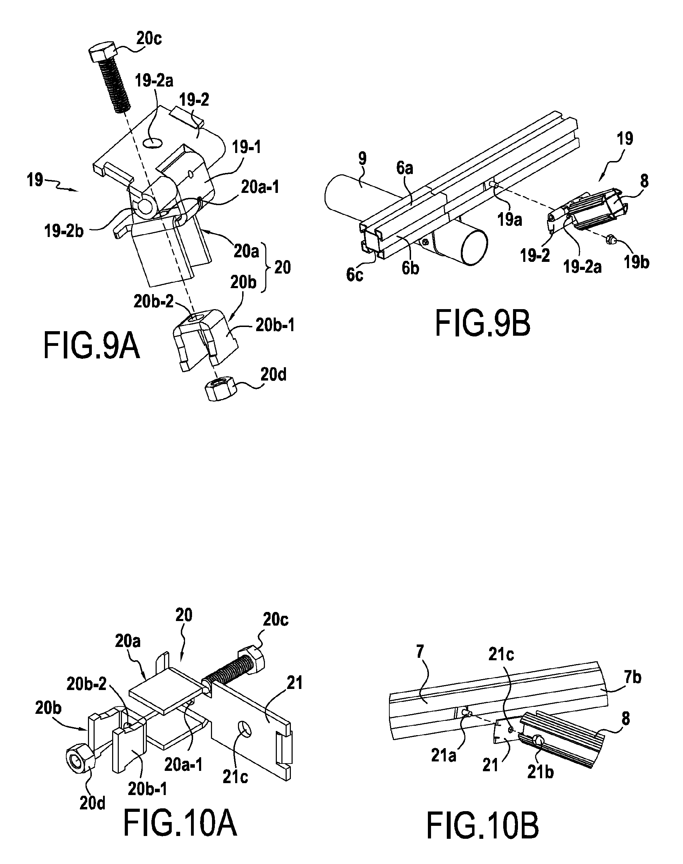

Comme illustré sur les figures 8, 9A et 9B les extrémités supérieures des bras d'ouvrant 8 sont fixées au profilés haut d'ouvrant 6 à l'aide de charnières 19 comportant deux pièces articulées en rotation l'une par rapport à l'autre, comprenant :
- une première pièce de charnière 19-1 comportant un dispositif de blocage 20 inséré à l'intérieur du profilé central 2 dudit bras d'ouvrant 8, et
- une deuxième pièce de charnière 19-2 comportant une plaque fixée par vissage à une deuxième plaquette ou lardon 19a, apte à coulisser avant blocage par dit vissage 19b à l'intérieur d'une rainure, de préférence une rainure latérale interne 6b du haut d'ouvrant 6.

Et, comme illustré sur les figures 8, 10A et 10B, les extrémités inférieures de bras d'ouvrant 8 sont fixées aux profilés de bas d'ouvrant 7 à l'aide d'une éclisse 21 s'étendant latéralement par rapport à l'extrémité du bras d'ouvrant, ladite éclisse étant fixée par vissage 21b,21c à une troisième plaquette 21a apte à coulisser avant blocage par dit vissage 21b,21c dans une rainure latérale interne 7b dudit profilé bas d'ouvrant 7, ladite éclisse étant solidaire d'un dispositif de blocage 20 à l'intérieur du profilé central 2 du bras d'ouvrant 8.

Plus particulièrement, ledit dispositif de blocage à l'intérieur du profilé central 2 comporte un élément 20a apte à être déployé en expansion et serré en expansion contre les parois internes dudit profilé central de bras d'ouvrant, par vissage à l'aide d'une vis ou boulon 20c,20d vissé depuis l'extrémité du bras d'ouvrant.

Ce mode de fixation du bras d'ouvrant sur les profilés haut et bas d'ouvrant présente l'avantage d'éviter tout perçage desdits profilés pour en réaliser l'assemblage d'une part, et d'autre part de maintenir libres les rainures desdits profilés pour permettre le coulissement des autres pièces destinées à y coulisser et y être bloquées pour d'autres fonctionnalités, comme mentionné précédemment. Ce mode de fixation du bras d'ouvrant sur les profilés haut et bas d'ouvrant permet un gain de temps également en pré-assemblant au sol le dispositif de serrage en insérant à l'intérieur du profilé central du bras d'ouvrant avant son montage sur la structure du cadre sur la toiture de la serre.

On entend ici par « coulisser avant blocage par vissage» que lesdites chape, équerre, éclisse ou plaque sont aptes à coulisser quand elles ne sont pas bloquées par vissage dans la rainure.

Plus précisément, les deux pièces formant charnière 19-1 et 19-2 comportent deux éléments longitudinaux formant des gonds pour la pièce 19-1 insérée à l'intérieur de deux éléments formant des tubes en bord de la pièce 19-2.

Le dispositif de blocage 20 comporte un premier étrier 20a destiné à maintenir en position un second étrier 20b dont les branches latérales sont évasées de sorte que, lorsqu'on insère une vis 20c depuis l'extérieur du bras ouvrant par un orifice 20a-1 de la paroi de fond du premier étrier 20a traversant également un deuxième orifice 20b-2 de la paroi de fond du deuxième étrier 20b inséré à l'intérieur du premier étrier 20a, le vissage avec un écrou 20d de la vis 20c permet d'écarter les branches 20b-1 du deuxième étrier 20b lesquelles viennent se bloquer contre les parois internes du profilé central du profilé formant bras d'ouvrant 8.

Dans la pièce formant éclisse 21, l'éclisse vient en prolongation de la paroi de fond comprenant un orifice 20a-1 du premier étrier 20a.

Le blocage par vissage de la deuxième pièce de charnière 19-2 se fait à l'aide d'un lardon glissant dans la rainure latérale interne 6b du profilé haut d'ouvrant, ledit lardon étant muni d'un vis 19a que l'on introduit dans l'orifice 19-2a central de la deuxième pièce de charnière 19-2 et que l'on bloque contre la face externe de la rainure 6b par vissage à l'aide de l'écrou 19b.

De la même manière un lardon muni d'une vis 21a coulissant dans la rainure latérale interne 7b du profilé bas d'ouvrant 7, permet le blocage par vissage de l'éclisse 21 en insérant la vis 21a dans l'orifice central 21c de l'éclisse 21 et en bloquant et serrant l'éclisse 21 contre la face externe de la rainure 7b en vissant l'écrou 21b sur la vis 21a.

Sur la figure 6, on voit que la symétrie des rainures latérales 6b et 6d d'un profilé haut d'ouvrant situé sur le faîtage de la nef permet d'y fixer deux cadres d'ouvrant avec des pièces de charnière 19 disposées dans chacune des rainures pour permettre la fixation de deux bras d'ouvrant respectivement dans chacune des rainures latérales 6b et 6d des profilés hauts d'ouvrant 6.

Une structure de serre selon l'invention comporte un cadre d'ouvrant 5 ouvert à l'aide d'un dispositif d'ouverture 25 comprenant un tube de transmission 25a entraîné en rotation sur lui-même par un motoréducteur 26 positionné sensiblement à mi-longueur dudit tube de transmission fixé dessous les cintres 9 de toiture de la serre, s'étendant dans la direction longitudinale XX' de la serre, et une pluralité d'éléments supports de bras d'ouvrant 15 formant crémaillère étant fixée à une extrémité sur ledit tube de transmission 25a et à l'autre extrémité respectivement sur la pluralité dudit bras d'ouvrant 8 de telle sorte que la rotation dudit tube de transmission 25a entraîne le déplacement de l'élément de support de bras d'ouvrant 15 formant crémaillère entraînant à son tour, l'ouverture ou la fermeture du cadre d'ouvrant, et les bras d'ouvrant 8 coopérant avec desdites pièces de support de bras d'ouvrant 15 dont ladite chape d'articulation 14 est bloquée à l'intérieur de ladite rainure inférieure 8c.

Le cadre d'ouvrant 5 présente une ouverture sensiblement uniforme sur toute sa longueur, ladite chape d'articulation 14 étant bloquée à une position différente pour des bras d'ouvrant 8 successifs, ladite position de la chape d'articulation 14 étant de plus en plus proche du profilé haut d'ouvrant 6 au fur et à mesure que les bras d'ouvrant 8 sont davantage éloignés dudit motoréducteur 26.

On comprend que le fonctionnement de ce dispositif d'ouverture de cadre d'ouvrant consiste en un réglage de la position d'attache de la chape d'articulation sur le bras d'ouvrant, ladite chape d'articulation pouvant coulisser librement dans la rainure inférieure du bras. Cette position variable de la chape d'articulation du dispositif du support de bras d'ouvrant permet de compenser la torsion angulaire du tube d'entraînement induite par le poids du cadre d'ouvrant, celle-ci augmentant lorsqu'on s'éloigne du moteur d'entraînement. L'ouverture du cadre d'ouvrant uniforme sur la longueur du cadre d'ouvrant, c'est-à-dire sensiblement parallèle aux chéneaux permet l'uniformisation de l'aération de l'intérieur de la serre et donc de la croissance des cultures qu'elle renferme. Cette ouverture uniforme s'accompagne également d'une sécurité de fermeture, l'effort de verrouillage de la fermeture étant identique sur la longueur du cadre d'ouvrant, ce qui évite l'aspiration de l'ouvrant aux extrémités pouvant être causée par le vent.

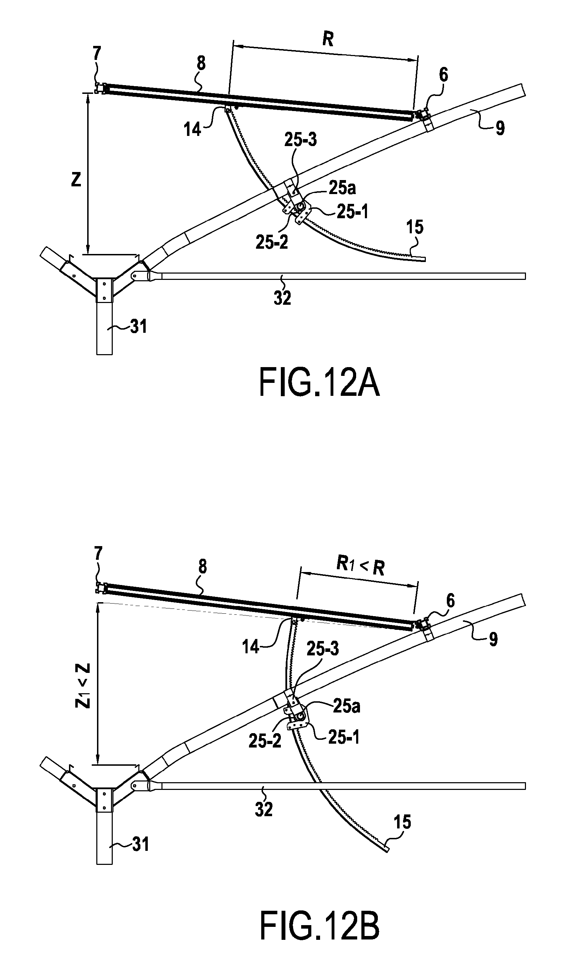

Sur les figures 12A et 12B, on a représenté l'ouverture d'un profilé bras d'ouvrant 8 à proximité du motoréducteur non représenté, dont la chape d'articulation 14 du dispositif support 15 est positionnée à une distance R du profilé haut d'ouvrant 6 sur la figure 12A et à une distance R1 inférieure à R sur la figure 12B pour obtenir une même ouverture Z du cadre d'ouvrant afin de compenser la flexion et affaissement du cadre tendant à diminuer l'ouverture du cadre à une hauteur Z1 en l'absence de déplacement. Sur les figures 12A et 12B, on voit que le déplacement de la chape d'articulation 14 le long de la rainure inférieure 8c du profilé bras d'ouvrant 8 se fait par basculement en rotation de la pièce 15 formant crémaillère en pivotant la pièce de fixation 25-1 assurant la fixation de la pièce crémaillère 15 sur le tube de transmission 25a.

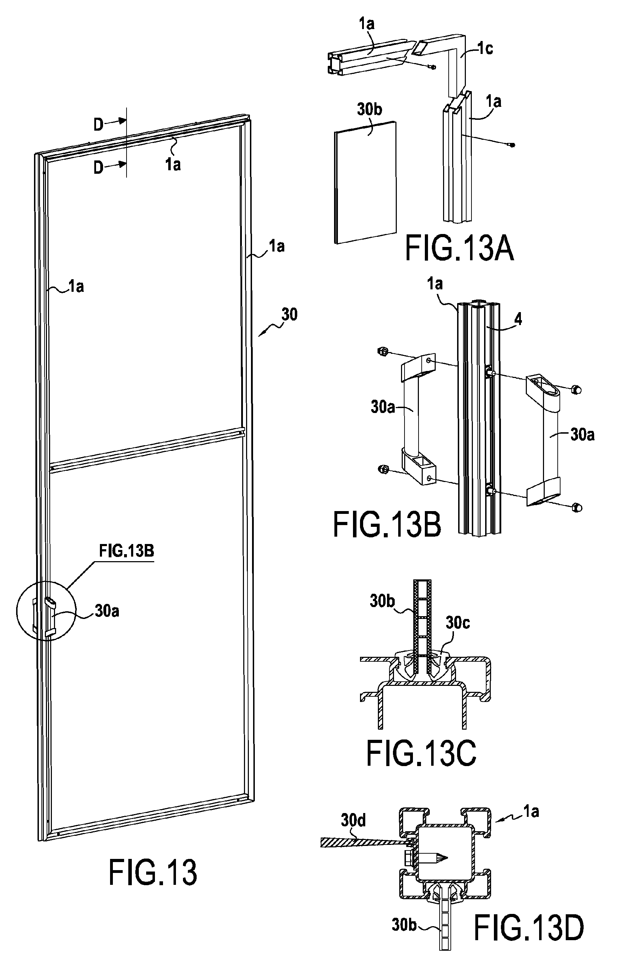

Sur la figure 13, on a représenté une porte de serre réalisée avec des profilés multitubulaires selon l'invention 1a à section carrée. Sur les figures 13B à 13D, les rainures 4 des profilés 1a permettent de fixer des plaques de polycarbonates 30b servant de panneaux de portes entre les profilés constituant les montants de portes à l'aide de dispositifs de fixation 30c à l'intérieur des rainures 4. Il est également possible de fixer des poignées 30a et brosses d'étanchéité 30d dans d'autres rainures 4 du même profilé 1a. Sur la figure 13A, on a représenté la jonction à angle droit entre deux profilés 1a à l'aide d'une pièce formant équerre 1c reproduisant la forme à section carrée des profilés centraux 2 des deux profilés 1a qui s'emboîtent ainsi dans les deux branches de l'équerre 1c pour réaliser la jonction des deux profilés 1a dont l'extrémité est biseautée à 45°.

Les profilés multitubulaires à section arrondie 1b selon l'invention peuvent également être avantageusement utilisés pour servir de profilés d'enroulement, notamment d'enroulement de bâche de fermeture sur les rives des nefs de serres.

## Revendications

1. Structure métallique de serre agricole ou horticole (10), de préférence en aluminium, dont la toiture comprend des cintres (9) supportant au moins un film de couverture (11), comprenat :
- au moins un cadre d'ouvrant (5) constitué d'un profilé haut d'ouvrant (6) et d'un profilé bas d'ouvrant (7) s'étendant dans la direction longitudinale (XX') de la serre (10) et des profilés bras d'ouvrant (8) s'étendant dans la direction transversale, lesdits profilés haut d'ouvrant (6), bas d'ouvrant (7) et bras d'ouvrant (8) étant fixés par-dessus lesdits cintres (9), et **caractérisé en ce que**:
- lesdits profilés haut d'ouvrant (6), bas d'ouvrant (7) et bras d'ouvrant (8) sont constitués avec des profilés multitubulaires fermés à glissières (1, 1a, 1b) comprenant :
. un premier profilé tubulaire fermé à quatre cotés (2a) dit profilé central (2) présentant une section transversale de forme carrée et
. quatre deuxièmes profilés tubulaires fermés dits profilés latéraux (3) identiques accolés contre respectivement chacun des quatre angles (2b) dudit profilé central, chaque dit profilé latéral présentant en section transversale une même forme symétrique par rapport à la diagonale (Y1Y1',Y2Y2') passant par l'angle (2b) du profilé central contre lequel il est accolé,
- les quatre dits profilés latéraux (3) et ledit profilé central (2) formant ainsi quatre rainures (4) identiques sur les quatre faces externes dudit profilé longitudinal multitubulaire (1).

2. Structure de serre selon la revendication 1, **caractérisée en ce que** ladite structure de serre comporte :
- une pluralité de fermes (10-1) parallèles constituées chacune d'un cintre supérieur (9) formant un arc brisé ou non et reposant sur les extrémités supérieures de deux poteaux latéraux verticaux (31), de préférence eux-mêmes reliés entre eux par une traverse de rigidification (32), et par des chéneaux latéraux (33) reliant desdits poteaux latéraux verticaux des fermes consécutives (10-1), lesdites fermes étant recouvertes d'au moins un film de couverture (11) tendu sur les cintres (9) et entre les chéneaux (33),
- ladite structure comprenant desdits profilés multitubulaires (1a, 1b) pour constituer au moins un cadre d'ouvrant (5), et
- on ne met en oeuvre qu'un seul bras d'ouvrant entre 2 cintres (9) consécutifs excepté les extrémités (8-1) du cadre d'ouvrant.

3. Structure de serre selon la revendication 1 ou 2, **caractérisée en ce que** les dimensions en section transversale desdits profilés bras d'ouvrant (8) sont inférieures à celles desdits profilés haut d'ouvrant (6) et bas d'ouvrant (7).

4. Structure de serre selon l'une des revendications 1 à 3, **caractérisée en ce que** les profilés haut d'ouvrant et bas d'ouvrant, ainsi que de préférence les profilés bras d'ouvrants (8-1) aux extrémités du cadre d'ouvrant, comportent une rainure (6a-6d,7a-7d,8a-8d), de préférence une rainure supérieure (6a,7a) pour les profilés haut et bas d'ouvrant et une rainure latérale (8b,8d) pour lesdits profilés bras d'ouvrant, coopérant avec un profilé formant un clip de fixation (12) apte à se déformer pour s'emboîter dans ladite rainure de manière à y fixer un film de couverture (11) par pincement, ledit film étant intercalé entre ladite rainure (6a,7a,8b-8d) et ledit profilé formant un clip de fixation (12), ledit profilé de fixation du film étant en matière plastique extrudée, de préférence ledit profilé formant clip de fixation (12) étant un profilé ouvert de type en oméga lui-même coopérant avec un profilé clé (13) formant un moyen d'écartement venant s'emboîter en force dans l'ouverture dudit profilé de fixation de film et ainsi bloquer ledit profilé de fixation de film à l'intérieur de la rainure dudit profilé haut d'ouvrant, bas d'ouvrant et le cas échéant bras d'ouvrant.

5. Structure de serre selon la revendication 4, **caractérisée en ce que** les profilés haut d'ouvrant (6) comportent :
- au moins un collier de serrage (27) fixé par vissage à une première plaquette (27-1) apte à coulisser avant blocage par dit vissage dans la rainure inférieure (6c) dudit profilé haut d'ouvrant, ledit collier permettant la fixation du profilé haut d'ouvrant autour dudit cintre (9) sur lequel il repose, et
- de préférence, une rainure latérale externe (6d) du haut d'ouvrant dans laquelle vient s'emboîter un profilé formant gouttière de récupération de condensation (24).

6. Structure de serre selon l'une des revendications 4 ou 5 respectivement, **caractérisée en ce que** les profilés bras d'ouvrants (8) comportent une chape d'articulation (14) apte à coulisser avant blocage par vissage dans leur rainure inférieure (8c), chape (14) à laquelle est fixée et articulée en rotation l'extrémité d'une pièce support (15) de bras d'ouvrant, ladite pièce support de bras d'ouvrant étant apte à être déplacée de manière à soulever ou baisser ledit bras d'ouvrant (8) articulé en rotation au niveau desdits profilés haut d'ouvrant (6) à l'aide de charnières (19).

7. Structure de serre selon l'une des revendications 4 à 6 respectivement, **caractérisée en ce que** les bras d'ouvrant (8-1) constituant une extrémité du cadre d'ouvrant (5) comportent l'un au moins des éléments suivants dans une de leurs rainures latérales (8b-8d) :
- desdits profilés de fixation de film de couverture (12,13) aptes à s'emboîter dans ladite rainure latérale pour y fixer le film de couverture par pincement, et
- des profilés de fixation (12,13) de filet anti-insectes (16-1) aptes à se déformer pour s'emboîter dans ladite rainure latérale de manière à fixer ledit filet (16-1) par pincement entre ladite rainure et ledit profilé, formant un clip de fixation (12,13), ledit filet anti-insectes (16-1) étant fixé à son autre bord au cintre (9) d'extrémité de la serre, et
- une plaque (17) apte à coulisser avant blocage par vissage (17a) dans ladite rainure latérale (8c,8d), ladite plaque supportant un câble de contreventement (17-3),
- une équerre (18) supportant un profilé ouvert (18-1) formant des rainures (18-1,18-2,18-3) aptes à coopérer avec des profilés de fixation (12,13) de film de couverture (11) ou de filet anti-insectes (16-1), ladite équerre (18) étant apte à coulisser avant blocage par vissage à l'intérieur de ladite rainure.

8. Structure de serre selon l'une des revendications 4 à 7 respectivement, **caractérisée en ce que** ledit profilé bas d'ouvrant (7) comporte :
- un profilé en matière élastomère formant joint d'étanchéité (23) bloqué à l'intérieur de la rainure inférieure (7c) dudit bas d'ouvrant, et
- de préférence une rainure latérale externe (7b) comportant un profilé de fixation (12,13) de filet anti-insectes (16) bloqué à l'intérieur de ladite rainure.

9. Structure de serre selon l'une des revendications 4 à 8 respectivement, **caractérisée en ce que** :
- les extrémités supérieures des bras d'ouvrant (8) sont fixées au profilés haut d'ouvrant (6) à l'aide de charnières (19) comportant deux pièces articulées en rotation l'une par rapport à l'autre, comprenant :
. une première pièce de charnière (19-1) comportant un dispositif de blocage (20) inséré à l'intérieur du profilé central (2) dudit bras d'ouvrant (8), et
. une deuxième pièce de charnière (19-2) comportant une plaque fixée par vissage (19b) à une deuxième plaquette (19a) apte à coulisser avant blocage par vissage (19b) à l'intérieur d'une rainure, de préférence une rainure latérale interne (6b) du haut d'ouvrant (6), et
- les extrémités inférieures de bras d'ouvrant (8) sont fixées aux profilés de bas d'ouvrant (7) à l'aide d'une éclisse (21) s'étendant latéralement par rapport à l'extrémité du bras d'ouvrant, ladite éclisse étant fixée par vissage (21b,21c) à une troisième plaquette (21a) apte à coulisser avant blocage par dit vissage (21b) dans une rainure latérale interne (7b) dudit profilé bas d'ouvrant (7), ladite éclisse étant solidaire d'un dispositif de blocage (20) à l'intérieur du profilé central (2) du bras d'ouvrant (8).

10. Structure de serre selon l'une des revendications 7 à 9, **caractérisée en ce qu'**elle comporte un cadre d'ouvrant (5) ouvert à l'aide d'un dispositif d'ouverture (25) comprenant un tube de transmission (25a) entraîné en rotation sur lui-même par un motoréducteur (26) positionné sensiblement à mi-longueur dudit tube de transmission fixé dessous les cintres (9) de toiture de la serre, s'étendant dans la direction longitudinale (XX') de la serre, et une pluralité d'éléments supports de bras d'ouvrant (15) formant crémaillère étant fixée à une extrémité sur ledit tube de transmission (25a) et à l'autre extrémité respectivement sur la pluralité dudit bras d'ouvrant (8) de telle sorte que la rotation dudit tube de transmission (25a) entraîne le déplacement de l'élément de support de bras d'ouvrant (15) formant crémaillère entraînant à son tour, l'ouverture ou la fermeture du cadre d'ouvrant, et les bras d'ouvrant (8) coopérant avec desdites pièces de support de bras d'ouvrant (15) dont ladite chape d'articulation (14) est bloquée à l'intérieur de ladite rainure inférieure (8c).

11. Structure de serre selon la revendication 10, **caractérisée en ce que** ledit cadre d'ouvrant (5) présente une ouverture sensiblement uniforme sur toute sa longueur, ladite chape d'articulation (14) étant bloquée à une position différente pour des bras d'ouvrant (8) successifs, ladite position de la chape d'articulation (14) étant de plus en plus proche du profilé haut d'ouvrant (6) au fur et à mesure que les bras d'ouvrant (8) sont davantage éloignés dudit motoréducteur (26).

12. Structure de serre selon l'une des revendications 1 à 11, **caractérisée en ce que** chaque dit profilé latéral (3) comprend deux parois latérales (3a), chaque paroi latérale (3a) comprenant une partie droite (4b) en élévation par rapport à la face externe d'un côté (2a) du profilé central (2), ladite partie droite (4b) de paroi latérale (3a) se prolongeant à son extrémité par une partie en forme de lèvre (4c) formant une protubérance vers l'intérieur de la rainure (4) définie par l'espace entre deux parois latérales (3a) en vis-à-vis de deux profilés latéraux (3) contigus, et chaque dit profilé latéral (3) comprend une paroi externe (3b, 3b 1, 3b 2, 3b 3) s'étendant entre les extrémités desdites deux parois latérales (3a) dudit même profilé latéral.

13. Structure de serre selon la revendication 12, **caractérisée en ce qu'**elle comprend des profilés multitubulaires fermés à section carrée (1a) dont chaque dite paroi externe (3b) de chaque dit profilé latéral (3) forme une cornière à profil en section transversal à angle droit pointé vers l'extérieur comprenant deux côtés perpendiculaires (3b-1, 3b-2).

14. Structure de serre selon la revendication 12, **caractérisée en ce qu'**elle comprend des profilés multitubulaires fermés de section arrondie (1b) dont chaque dite paroi externe de dit profilé latéral présente un profil courbe convexe (3b-3) en section transversale, la dite courbure étant de préférence en arc de cercle, dont le centre de courbure correspond au centre de la section carrée du dit profil central, de préférence un arc de cercle sur 40 à 45°.

15. Structure de serre selon les revendications 13 et 14, caractérisée en quelle comprend :
- desdits profilés haut d'ouvrant (6) et bas d'ouvrant (7) constitués de dits profilés multitubulaires fermés à section carrée (1a), et
- desdits profilés bras d'ouvrant (8) constitués de dits profilés multitubulaires fermés à section arrondie (1b).

16. Structure de serre selon l'une des revendications 1 à 15, **caractérisée en ce qu'**elle comprend en outre une porte de serre (30) constituée de dits profilés multitubulaires, de préférence de dits profilés multitubulaires à section carrée (1a).

## Patentansprüche

1. Metallstruktur eines Gewächshauses für Landwirtschaft oder Gartenbau (10), vorzugsweise aus Aluminium, dessen Bedachung Bögen (9) umfaßt, die wenigstens eine Abdeckfolie (11) tragen, umfassend:
- wenigstens einen Flügelrahmen (5), der aus einem Flügeloberteilprofil (6) und aus einem Flügelunterteilprofil (7), welche in Längsrichtung (XX') des Gewächshauses (10) verlaufen, und aus den Flügelarmprofilen (8), die in Querrichtung verlaufen, besteht, wobei die Flügeloberteil- (6), Flügelunterteil- (7) und Flügelarmprofile (8) über den Bögen (9) befestigt sind, und **dadurch gekennzeichnet, daß**:
- die Flügeloberteil- (6), Flügelunterteil- (7) und Flügelarmprofile (8) mit geschlossenen Mehrröhrenprofilen mit Gleitschienen (1, 1 a, 1 b) gebildet sind, die umfassen:
• ein erstes geschlossenes, vierseitiges röhrenförmiges Profil (2a), sogenanntes mittleres Profil, das einen Querschnitt mit quadratischer Form aufweist, und
• vier identische zweite geschlossene röhrenförmige Profile, sogenannte Seitenprofile (3), die jeweils an jede der vier Ecken (2b) des mittleren Profils angesetzt sind, wobei jedes Seitenprofil im Querschnitt eine gleiche symmetrische Form in Bezug auf die Diagonale (Y1Y1', Y2Y2'), welche durch die Ecke (2b) des mittleren Profils, an die es angesetzt ist, verläuft, aufweist,
- wodurch die vier Seitenprofile (3) und das mittlere Profil (2) vier identische Nuten (4) an den vier Außenseiten des Mehrröhrenlängsprofils (1) bilden.

2. Gewächshausstruktur nach Anspruch 1, **dadurch gekennzeichnet, daß** die Gewächshausstruktur umfaßt:
- eine Vielzahl von parallelen Bindern (10-1), die jeweils von einem oberen Bogen (9) gebildet sind, welcher einen geknickten oder nicht geknickten Bogen bildet und auf den oberen Enden von zwei vertikalen Seitenstützen (31) aufliegt, die vorzugsweise selbst untereinander durch eine Versteifungstraverse (32) und durch seitliche Dachrinnen (33), welche vertikale Seitenstützen der aufeinanderfolgenden Binder (10-1) verbinden, verbunden sind, wobei die Binder mit wenigstens einer Abdeckfolie (11), die über die Bögen (9) und zwischen den Dachrinnen (33) gespannt ist, bedeckt sind,
- wobei die Struktur Mehrröhrenprofile (1a, 1b) zum Bilden wenigstens eines Flügelrahmens (5) umfaßt, und
- bis auf die Enden (8-1) des Flügelrahmens lediglich ein einziger Flügelarm zwischen zwei aufeinanderfolgenden Bögen (9) verwendet wird.

3. Gewächshausstruktur nach Anspruch 1 oder 2, **dadurch gekennzeichnet, daß** die Querschnittsabmessungen der Flügelarmprofile (8) kleiner als die der Flügeloberteil- (6) und Flügelunterteilprofile (7) sind.

4. Gewächshausstruktur nach einem der Ansprüche 1 bis 3, **dadurch gekennzeichnet, daß** die Flügeloberteil- und Flügelunterteilprofile, sowie vorzugsweise die Flügelarmprofile (8-1) an den Enden des Flügelrahmens, eine Nut (6a-6d, 7a-7d, 8a-8d), vorzugsweise eine obere Nut (6a, 7a) für die Flügeloberteil- und Flügelunterteilprofile und eine seitliche Nut (8b, 8d) für die Flügelarmprofile umfassen, die mit einem einen Befestigungsclip (12) bildenden Profil zusammenwirken, das geeignet ist, sich zu verformen, um in die Nut einzugreifen, um hierin einer Abdeckfolie (11) klemmend zu fixieren, wobei die Folie zwischen der Nut (6a, 7a, 8b-8d) und dem einen Befestigungsclip (12) bildenden Profil eingefügt ist, wobei das Profil zur Befestigung der Folie aus extrudiertem Kunststoff besteht, wobei vorzugsweise das einen Befestigungsclip (12) bildende Profil ein offenes Profil vom omegaförmigen Typ ist, das selbst mit einem Schlüsselprofil (13) zusammenwirkt, welches ein Spreizmittel bildet, das mit Kraft in die Öffnung des Folienbefestigungsprofils eingreift und somit das Folienbefestigungsprofil innerhalb der Nut des Flügeloberteil-, Flügelunterteil- und gegebenenfalls Flügelarmprofils blockiert.

5. Gewächshausstruktur nach Anspruch 4, **dadurch gekennzeichnet, daß** die Flügeloberteilprofile (6) umfassen:
- wenigstens eine Klemmschelle (27), die an einem ersten Plättchen (27-1) festgeschraubt ist, das geeignet ist, vor dem Festschrauben in der unteren Nut (6c) des Flügeloberteilprofils zu gleiten, wobei die Schelle die Befestigung des Flügeloberteilprofils um den Bogen (9), auf dem es aufliegt, ermöglicht, und
- vorzugweise eine seitliche Außennut (6d) des Flügeloberteils, in die ein eine Kondensationsauffangrinne (24) bildendes Profil eingreift.

6. Gewächshausstruktur nach einem der Ansprüche 4 bzw. 5, **dadurch gekennzeichnet, daß** die Flügelarmprofile (8) einen Gelenkbügel (14) umfassen, der geeignet ist, vor dem Festschrauben in deren unterer Nut (8c) zu gleiten, Bügel (14), an dem das Ende eines Flügelarm-Tragteils (15) befestigt und hieran drehbar angelenkt ist, wobei das Flügelarm-Tragteil geeignet ist, bewegt zu werden, um den Flügelarm (8), der mit Hilfe von Scharnieren (19) im Bereich der Flügeloberteilprofile (6) drehbar angelenkt ist, anzuheben oder abzusenken.

7. Gewächshausstruktur nach einem der Ansprüche jeweils 4 bis 6, **dadurch gekennzeichnet, daß** die Flügelarme (8-1), die ein Ende des Flügelrahmens (5) bilden, wenigstens eines der folgenden Elemente in einer ihrer seitlichen Nuten (8b-8d) umfassen:
- Profile zur Befestigung einer Abdeckfolie (12, 13), die geeignet sind, in die seitliche Nut einzugreifen, um hierin die Abdeckfolie klemmend zu fixieren, und
- Profile zur Befestigung (12, 13) eines Insektenschutznetzes (16-1), die geeignet sind, sich zu verformen, um in die seitliche Nut einzugreifen, um das Netz (16-1) zwischen der Nut und dem Profil, das einen Befestigungsclip (12, 13) bildet, klemmend zu fixieren, wobei das Insektenschutznetz (16-1) an seinem anderen Rand an dem endseitigen Bogen (9) des Gewächshauses befestigt ist, sowie
- eine Platte (17), die geeignet ist, vor dem Festschrauben (17a) in der seitlichen Nut (8c, 8d) zu gleiten, wobei die Platte ein Versteifungsseil (17-3) trägt,
- einen Winkel (18), der ein offenes Profil (18-1) trägt, das Nuten (18-1, 18-2, 18-3) bildet, die geeignet sind, mit Profilen zur Befestigung (12, 13) einer Abdeckfolie (11) oder eines Insektenschutznetzes (16-1) zusammenzuwirken, wobei der Winkel (18) geeignet ist, vor dem Festschrauben innerhalb der Nut zu gleiten.

8. Gewächshausstruktur nach einem der Ansprüche jeweils 4 bis 7, **dadurch gekennzeichnet, daß** das Flügelunterteilprofil (7) umfaßt:
- ein eine Dichtung (23) bildendes Profil aus Elastomermaterial, das innerhalb der unteren Nut (7c) des Flügelunterteils festgelegt ist, und
- vorzugsweise eine seitliche Außennut (7b), die ein Profil zur Befestigung (12, 13) eines Insektenschutznetzes (16), das innerhalb der Nut festgelegt ist, umfaßt.

9. Gewächshausstruktur nach einem der Ansprüche jeweils 4 bis 8, **dadurch gekennzeichnet, daß**:
- die oberen Enden der Flügelarme (8) an den Flügeloberteilprofilen (6) mit Hilfe von Scharnieren (19), die zwei zueinander drehbar angelenkte Teile aufweisen, befestigt sind, umfassend:
• ein erstes Scharnierteil (19-1), das eine Blockiervorrichtung (20), die in das mittlere Profil (2) des Flügelarms (8) eingefügt ist, umfaßt, und
• ein zweites Scharnierteil (19-2), das eine Platte umfaßt, welche an einem zweiten Plättchen (19a) festgeschraubt ist (19b), das geeignet ist, vor dem Festschrauben (19b) in einer Nut, vorzugsweise einer seitlichen Innennut (6b) des Flügeloberteils (6), zu gleiten, und
- die unteren Enden des Flügelarms (8) an den Flügelunterteilprofilen (7) mit Hilfe einer Lasche (21), die in Bezug auf das Ende des Flügelarms seitlich verläuft, befestigt sind, wobei die Lasche an einem dritten Plättchen (21 a) festgeschraubt ist (21 b, 21 c), welches geeignet ist, vor dem Festschrauben (21 b) in einer seitlichen Innennut (7b) des Flügelunterteilprofils (7) zu gleiten, wobei die Lasche mit einer Blockiervorrichtung (20) innerhalb des mittleren Profils (2) des Flügelarms (8) fest verbunden ist.

10. Gewächshausstruktur nach einem der Ansprüche 7 bis 9, **dadurch gekennzeichnet, daß** sie einen Flügelrahmen (5) umfaßt, der mit Hilfe einer Öffnungsvorrichtung (25) geöffnet wird, die ein Übertragungsrohr (25a) umfaßt, welches durch einen im wesentlichen auf halber Länge des unter den Bögen (9) der Bedachung des Gewächshauses befestigten, in Längsrichtung (XX') des Gewächshauses verlaufenden Übertragungsrohrs positionierten Getriebemotor (26) um sich selbst drehangetrieben wird, und wobei eine Vielzahl von eine Zahnstange bildenden Flügelarm-Tragelementen (15) an einem Ende an dem Übertragungsrohr (25a) und am anderen Ende jeweils an der Vielzahl des Flügelarms (8) befestigt ist, derart, daß die Drehung des Übertragungsrohrs (25a) zur Bewegung des eine Zahnstange bildenden Flügelarm-Tragelementes (15) führt, das seinerseits das Öffnen oder das Schließen des Flügelrahmens bewirkt, und wobei die Flügelarme (8) mit Flügelarm-Tragteilen (15) zusammenwirken, deren Gelenkbügel (14) innerhalb der unteren Nut (8c) blockiert ist.

11. Gewächshausstruktur nach Anspruch 10, **dadurch gekennzeichnet, daß** der Flügelrahmen (5) eine über seine gesamte Länge im wesentlichen gleichförmige Öffnung aufweist, wobei der Gelenkbügel (14) für aufeinanderfolgende Flügelarme (8) an einer unterschiedlichen Position blockiert ist, wobei die Position des Gelenkbügels (14) mit zunehmender Entfernung der Flügelarme (8) von dem Getriebemotor (26) dem Flügeloberteilprofil (6) immer näher liegt.

12. Gewächshausstruktur nach einem der Ansprüche 1 bis 11, **dadurch gekennzeichnet, daß** jedes Seitenprofil (3) zwei Seitenwände (3a) umfaßt, wobei jede Seitenwand (3a) einen gegenüber der Außenfläche einer Seite (2a) des mittleren Profils (2) erhabenen rechten Teil (4b) umfaßt, wobei der rechte Teil (4b) der Seitenwand (3a) an seinem Ende durch einen lippenförmigen Teil (4c), der einen Vorsprung zum Innenraum der durch den Raum zwischen zwei gegenüberliegenden Seitenwänden (3a) von zwei benachbarten Seitenprofilen (3) definierten Nut (4) bildet, fortgesetzt ist, und jedes Seitenprofil (3) eine Außenwand (3b, 3b 1, 3b 2, 3b 3), die sich zwischen den Enden der beiden Seitenwände (3a) des gleichen Seitenprofils erstreckt, umfaßt.

13. Gewächshausstruktur nach Anspruch 12, **dadurch gekennzeichnet, daß** sie geschlossene Mehrröhrenprofile mit quadratischem Querschnitt (1a) umfaßt, von denen jede Außenwand (3b) jedes Seitenprofils (3) ein Winkelprofil mit, im Querschnitt, einem Profil mit nach außen gerichtetem rechtem Winkel mit zwei senkrechten Seiten (3b-1, 3b-2) bildet.

14. Gewächshausstruktur nach Anspruch 12, **dadurch gekennzeichnet, daß** sie geschlossene Mehrröhrenprofile mit abgerundetem Querschnitt (1 b) umfaßt, von denen jede Außenwand (3b) des Seitenprofils ein im Querschnitt konvexes gekrümmtes Profil (3b-3) aufweist, wobei die Krümmung vorzugsweise als Kreisbogen vorliegt, dessen Krümmungsmittelpunkt dem Mittelpunkt des quadratischen Querschnitts des mittleren Profils entspricht, vorzugsweise ein Kreisbogen über 40 bis 45° ist.

15. Gewächshausstruktur nach den Ansprüchen 13 und 14, **dadurch gekennzeichnet, daß** sie umfaßt:
- Flügeloberteil- (6) und Flügelunterteilprofile (7), die von geschlossenen Mehrröhrenprofilen mit quadratischem Querschnitt (1a) gebildet sind, und
- Flügelarmprofile (8), die von geschlossenen Mehrröhrenprofilen mit abgerundetem Querschnitt (1 b) gebildet sind.

16. Gewächshausstruktur nach einem der Ansprüche 1 bis 15, **dadurch gekennzeichnet, daß** sie ferner eine Gewächshaustür (30) umfaßt, die von Mehrröhrenprofilen, vorzugsweise von Mehrröhrenprofilen mit quadratischem Querschnitt (1a) gebildet ist.

## Claims

1. A metal structure for an agricultural or horticultural glasshouse (10), preferably made of aluminum, in which the roof comprises arches (9) supporting at least one covering film (11), the structure comprising:
· at least one sash frame (5), the frame being constituted by a sash top bar (6), by a sash bottom bar (7) extending in the longitudinal direction (XX') of the glasshouse (10) and by sash arm bars (8) extending the transverse direction, said sash top, sash bottom, and sash arm bars (6, 7, 8) being fastened above said arches (9), and this structure being **characterized in that**:
· said sash top, sash bottom, and sash arm bars (6, 7, 8) are made up of closed multitubular section members with slideways (1, 1a, 1b) comprising:
· a first closed tubular section member with four sides (2a) referred to as a central bar (2) presenting a cross-section of square shape; and
· four identical second closed tubular section members referred to as side bars (3), each placed against a respective one of the four corners (2b) of said central bar, each said side bar presenting a cross-section having the same symmetrical shape relative to the diagonal (Y1Y1', Y2Y2') passing through the corner (2b) of the central bar against which it is placed; and
· said four side bars (3) and said central bar (2) thus forming four identical grooves (4) along the four outside faces of said multitubular longitudinal section member (1).

2. A glasshouse structure according to claim 1, **characterized in that** said glasshouse structure comprises:
· a plurality of parallel roof trusses (10-1) each constituted by a top arch (9) optionally forming an ogive and resting on the top ends of two vertical side posts (31), preferably themselves connected together by a stiffening cross-member (32) and by side gutters (33) interconnecting said vertical side posts of consecutive trusses (10-1), said trusses being covered by at least one covering film (11) tensioned over the arches (9) and between the gutters (33);
· said structure comprising said multitubular section members (1a, 1b) for constituting at least one sash frame (5); and
· only one sash arm is provided between two consecutive arches (9), with the exception of the ends (8-1) of the sash frame.

3. A glasshouse structure according to claim 1 or claim 2, **characterized in that** the cross-sectional dimensions of said sash arm bars (8) are less than those of said sash top and sash bottom bars (6, 7).

4. A glasshouse structure according to any one of claims 1 to 3, **characterized in that** said sash top and sash bottom bars, and also preferably the sash arm bars (8-1) at the ends of the sash frame include respective grooves (6a-6d, 7a-7d, 8a-8d), preferably top grooves (6a, 7a) for the sash top and bottom bars and a side groove (8b, 8d) for said sash arm bars, co-operating with a section member forming a fastener clip (12) suitable for deforming to engage in said groove in such a manner as to fasten a covering film (11) therein by pinching, said film being interposed between said groove (6a, 7a, 8b-8d) and said section member forming a fastener clip (12), said section member for fastening the film being made of extruded plastics material, said section member forming a fastener clip (12) preferably being an open section member of the omega type, itself co-operating with a key section member (13) forming spreader means that are engaged by force in the opening of said film fastener section member so as to block said film fastener section member inside the groove of said sash top bar, said sash bottom bar, and where appropriate said sash arm bar.

5. A glasshouse structure according to claim 4, **characterized in that** the sash top bars (6) comprise:
• at least one clamping collar (27) fastened by screws to a first plate (27-1) suitable for sliding in said bottom groove (6c) of said sash top bar prior to being locked by said screws, said collar enabling the sash top bar to be fastened around said arch (9) on which it rests; and
• preferably, an outer side groove (6d) of the sash top bar in which there is engaged a section member forming a gutter (24) for recovering condensation.

6. A glasshouse structure according to claim 4 or claim 5 respectively, **characterized in that** the sash arm bars (8) include respective hinge forks (14) suitable for sliding in their bottom grooves (8c) prior to being blocked by screws, each of which forks (14) is fastened and pivotally hinged to the end of a sash arm support part (15), said sash arm support part being suitable for being moved so as to raise or lower said sash arm (8) that is pivotally hinged to said sash top bars (6) with the help of hinges (19).

7. A glasshouse structure according to any one of claims 4 to 6 respectively, **characterized in that** the sash arms (8-1) constituting one end of the sash frame (5) include at least one of the following elements in one of their side grooves (8b-8d):
• said covering film fastener section members (12, 13) suitable for engaging in said side groove in order to fasten the covering film therein by pinching; and
• section members (12, 13) for fastening an anti-insect net (16-1) and suitable for deforming so as to be engaged in said side groove so as to fasten said net (16-1) by pinching between said groove and said section member, thereby forming a fastener clip (12, 13), said anti-insect net (16-1) being fastened at its other edge to the end arch (9) of the glasshouse; and
• a plate (17) suitable for sliding in said side groove (8c, 8d) before being blocked by screws (17a), said plate supporting a bracing cable (17-3); and
• a bracket (18) supporting an open section member (18-1) forming grooves (18-1, 18-2, 18-3) suitable for co-operating with fastener section members (12, 13) for fastening a covering film (11) or an anti-insect net (16-1), said bracket (18) being suitable for sliding inside said groove, before being blocked by screws.

8. A glasshouse structure according to any one of claims 4 to 7 respectively, **characterized in that** said sash bottom bar (7) comprises:
• a section member of elastomer material forming a sealing gasket (23) that is blocked inside the bottom groove (7c) of said sash bottom; and
• preferably an outer side groove (7b) including a section member (12, 13) for fastening an anti-insect net (16) blocked inside said groove.

9. A glasshouse structure according to any one of claims 4 to 8 respectively, **characterized in that**:
• the top ends of the sash arms (8) are fastened to the sash top bars (6) with the help of hinges (19), each comprising two parts hinged to pivot relative to each other and comprising:
• a first hinge part (19-1) having a blocking device (20) inserted inside the central bar (2) of said sash arm (8); and
• a second hinge part (19-2) comprising a plate (19b) that is screw-fastened to a second plate (19a) suitable for sliding inside a groove before being blocked by screws (19b), preferably for sliding in an internal side groove (6b) of the sash top (6); and
• the bottom ends of the sash arms (8) are fastened to the sash bottom bars (7) with the help of splints (21) extending laterally relative to the end of the sash arm, said splint being fastened by screws (21b, 21c) to a third plate (21a) suitable for sliding in an internal side groove (7b) of said sash bottom bar (7) before being blocked by said screws (21b), said splint being secured to a device (20) for blocking inside the central bar (2) of the sash arm (8).

10. A glasshouse structure according to any one of claims 7 to 9, **characterized in that** it includes a sash frame (5) that is opened with the help of an opening device (25) comprising a transmission tube (25a) driven in rotation about its own axis by a gearmotor (26) located substantially halfway along said transmission tube that is fastened under the arches (9) of the glasshouse roof, extending in the longitudinal direction (XX') of the glasshouse, and a plurality of sash arm support elements (15) forming a rack being fastened at one end on said transmission tube (25a) and at the other end respectively on the plurality of said sash arm (8) in such a manner that rotating said transmission tube (25a) causes the rack-forming sash arm support element (15) to move and thereby in turn opening or closing the sash frame, the sash arms (8) co-operating with said sash arm support parts (15) in which said hinge forks (14) are blocked inside said bottom groove (8c).

11. A glasshouse structure according to claim 10, **characterized in that** said sash frame (5) presents an opening that is substantially uniform over its entire length, said hinge fork (14) being blocked in different positions for successive sash arms (8), said positions of the hinge forks (14) being progressively closer to the sash top bar (6) with increasing distance of the sash arms (8) from said gearmotor (26).

12. A glasshouse structure according to any one of claims 1 to 11, **characterized in that** each said side bar (3) has two side walls (3a), each side wall (3a) having a straight portion (4b) in elevation relative to the outside face of a side (2a) of the central bar (2), said straight portion (4b) of the side wall (3a) being extended at its end by a lip-shaped portion (4c) forming a projection towards the inside of the groove (4) defined by the gap between two facing side walls (3a) of two contiguous side bars (3), and each said side bar (3) includes an outside wall (3b, 3b-1, 3b-2, 3b-3) extending between the ends of said two side walls (3a) of said given side bar.

13. A glasshouse structure according to claim 12, **characterized in that** it has closed multitubular section members (1a) of square section in which each said outside wall (3b) of each said side bar (3) forms an angle bar of right-angled cross-section pointing towards the outside and having two perpendicular sides (3b-1, 3b-2).

14. A glasshouse structure according to claim 12, **characterized in that** it comprises closed multitubular section members (1b) of rounded section in which each said outside wall of said side bar presents a cross-section of convex curved profile (3b-3), said curvature preferably being a circularly arcuate curve, with the center of curvature corresponding to the center of the square section of said central bar, the circular arc preferably extending over 40° to 45°.

15. A glasshouse structure according to claims 13 and 14, the structure being **characterized in that** it comprises:
· said sash top and sash bottom bars (6, 7) constituted by said square section closed multitubular section members (1a) ; and
· said sash arm bars (8) constituted by said closed multitubular section members (1b) of rounded section.

16. A glasshouse structure according to any one of claims 1 to 15, **characterized in that** it further comprises a glasshouse door (30) made up of said multitubular section members, preferably of said square section multitubular section members (1a).
